# EUROPEAN PATENT SPECIFICATION

(11) **EP 4 458 523 B1**
(45) Date of publication and mention of the grant of the patent: **20.05.2026**
(21) Application number: 23795599.2
(22) Date of filing: 28.04.2023
(51) Int. Cl.: B25J 9/16, G05D 1/639, G05D 1/693, G05D 1/65, G05D 107/60, G05D 109/10

(54) **ROBOT PASSING METHOD AND ASSOCIATED ROBOT**
ROBOTERDURCHGANGSVERFAHREN UND ROBOTER DAZU
PROCÉDÉ DE PASSAGE DE ROBOT ET ROBOT ASSOCIÉ

(30) Priority: 29.04.2022 CN 202210468517; 06.05.2022 CN 202210487957; 11.04.2023 CN 202310415442
(43) Date of publication of application: 06.11.2024
(73) Proprietor: Shenzhen Pudu Technology Co., Ltd., Shenzhen, Guangdong 518000 (CN)
(72) Inventor: YUAN, Yi, Shenzhen, Guangdong 518000 (CN); CHEN, Hanrong, Shenzhen, Guangdong 518000 (CN); WU, Zhouyu, Shenzhen, Guangdong 518000 (CN); ZHANG, Yongsheng, Shenzhen, Guangdong 518000 (CN); LIN, Shicheng, Shenzhen, Guangdong 518000 (CN); ZHU, Junan, Shenzhen, Guangdong 518000 (CN)
(74) Representative: Appleyard Lees IP LLP
(86) International application number: PCT/CN2023/091454
(87) International publication number: WO 2023/208167

(56) References cited:
- EP-A1- 3 985 218
- CN-A- 111 462 375
- CN-A- 112 017 351
- CN-A- 112 502 566
- CN-A- 112 540 605
- CN-A- 114 217 623
- CN-A- 115 016 459
- DE-A1- 102017 112 839
- US-A1- 2021 138 654

## Description

### TECHNICAL FIELD

The present disclosure relates to the field of automation technology, and in particular, to a robot traversal method and a robot.

### BACKGROUND

With the development of automation technology, various smart devices have emerged, bringing great convenience to people's lives and work. Robots are one of the most important smart devices.

In conventional technology, at least one door is usually installed in a passage with partition requirements to partition the passage. When multiple robots need to pass through the passage, congestion often occurs, resulting in low efficiency of robot access.

The patent application No. EP3985218A1 discloses a logistics control system, a robot control apparatus, an automatic door control method, and a route planning apparatus. The robot control apparatus can plan a traveling route passing through an automatic door for an intelligent mobile robot, and generate, by monitoring a movement position of the intelligent mobile robot along the traveling route, a door-opening request when the movement position of the intelligent mobile robot reaches a traffic upstream section of the automatic door, the door-opening request being used for triggering a device control apparatus to control opening of a corresponding automatic door.

The patent application No. CN112017351A discloses a control method, system, and device for a self-driving robot to pass through a door, and a storage medium. The control method includes the self-driving robot obtaining inspection task information, and determining a walking route and closed doors to be passed according to the inspection task information. When the self-driving robot travels to a position have a predetermined distance from the target closed door, it sends door opening request information to a door control system. The door control system receives the door opening request information, and obtains a monitoring result of a sensor of the target closed door according to the identifier. When it is determined that the target closed door meets the door opening conditions, the door control system controls the target closed door to open. When it is determined that the target closed door does not meet the door opening conditions, the door control system issues a notification for manual processing.

The patent application No. DE102017112839A1 discloses a system consisting of a vehicle in the form of an independently moving vehicle in the form of a cleaning robot, and a door with a doorframe and a door leaf. The vehicle has a detector for detecting object data within the environment. In order to be able to open a door without the cleaning robot manually acting on the door, the door has an electronic actuator for changing an open state of the door, and the vehicle has or is allocated a controller, which is set up to output a control command for activating the actuator depending on an operating state and/or position of the vehicle.

### SUMMARY

According to various embodiments of the present disclosure, a robot traversal method and a robot are provided.

The robot traversal method is applied to a target robot. The target robot is any robot among multiple robots that need to pass through a transition area. The method includes:
determining, when the target robot travels to the transition area, a present door corresponding to the target robot in the transition area; and
controlling the present door to be opened and passing through the present door;
wherein the method further comprises:
   broadcasting area occupancy information when the target robot travels into the transition area, the area occupancy information being configured to indicate that the transition area is occupied; and
   broadcasting area release information when the target robot travels out of the transition area, the area release information being configured to indicate that the transition area is released.

A robot includes a memory and a processor. The memory stores a computer program, and the processor is configured to implement the steps of the above-mentioned robot traversal method when executing the computer program.

Details of one or more embodiments of the present disclosure are set forth in the accompanying drawings and the description below. Other features and advantages of the disclosure will be apparent from the description, drawings, and claims.

### BRIEF DESCRIPTION OF THE DRAWINGS

FIG. 1 is a schematic diagram of an application environment of a robot traversal method according to an embodiment;
FIG. 2 is a flow chart of a robot traversal method according to an embodiment;
FIG. 3 is a schematic diagram showing an effect of multiple robots passing through a transition area according to an embodiment;
FIG. 4 is a schematic diagram showing a positional relationship between a present door, a forward door, and a back door according to an embodiment;
FIG. 5 is a schematic diagram showing an effect of a relative position relationship between multiple robots according to an embodiment;
FIG. 6 is a schematic diagram of a transition area according to an embodiment;
FIG. 7 is a schematic diagram of robots traveling in one direction and one way according to an embodiment;
FIG. 8 is a schematic diagram of a transition sub-area according to an embodiment;
FIG. 9 is a flow chart of a robot passing through multiple levels of doors according to an embodiment;
FIG. 10 is a schematic diagram of robots traveling in one direction and two ways according to an embodiment;
FIG. 11 is a schematic diagram of robots traveling in two directions and one way according to an embodiment;
FIG. 12 is a flow chart of passive equipment passing through multiple levels of doors according to an embodiment;
FIG. 13 is a flow chart of active equipment passing through multiple levels of doors according to an embodiment.

### DETAILED DESCRIPTION OF THE EMBODIMENTS

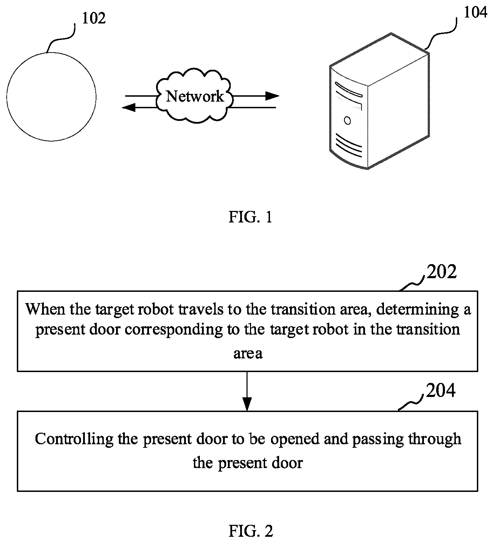

A robot traversal method provided by the embodiments of the present disclosure can be applied in an application environment as shown in FIG. 1. In the application environment, a device 102 communicates with a server 104 through a network. The device 102 can be a robot or a control device, such as a robot digital processor. The robot digital processor can be integrated in a robot, and the control device controls various robots in a transition area. The server 104 can be implemented as an independent server or a server cluster composed of multiple servers. A data storage system can store the data that the server 104 needs to process. The data storage system can be integrated on the server 104, or placed on the cloud or other network servers. Both the device 102 and server 104 can be used individually to perform the robot traversal method provided in the embodiments of the present disclosure. The device 102 and server 104 can also be used collaboratively to perform the robot traversal method provided in the embodiments of the present disclosure. The device 102 can be, but is not limited to, at least one of various self-moving devices, robots, self-driving cars, unmanned aircraft, etc. The robot can be a smart device that perform various functions through self-moving, such as a cleaning robot, a delivery robot, a logistics robot, a disinfection robot, etc. The present disclosure will be described with the device 102 being a robot. The robot can perform the robot traversal method in the present disclosure independently, or it can cooperate with a server or other robots to perform the robot traversal method in the present disclosure.

In an embodiment, as shown in FIG. 2, a robot traversal method is provided. Taking the application of the method to a target robot as an example, the method includes step 202 and step 204.

In step 202, when the target robot travels to a transition area, a present door corresponding to the target robot in the transition area is determined.

The transition area refers to a passage connecting a first area and a second area, and at least one door is provided in the transition area. In a possible embodiment, the first area is an isolation area, and the second area is the outside. The present door refers to the first door that the target robot presently needs to pass through, which can be understood as the door closest to the target robot in the traveling direction of the target robot. The door can be a gate.

Exemplarily, when the target robot obtains position information thereof and determines, based on the position information, that the target robot has moved to the transition area, installation position information of each door in the transition area is obtained, and the present door corresponding to the target robot is determined based on the position information and the installation position information of each door.

In step 204, the present door is controlled to be opened and the present door is passed through.

Exemplarily, the target robot sends an open instruction to a door control system, the door control system opens the present door, and the target robot passes through the present door. The door control system can also include a door control device or a door control unit for controlling the door to be opened or to be closed. For example, the door control system can be a door control device that jointly controls each door of multiple levels of doors, i.e., the multiple levels of doors can be controlled by one door control system. Alternatively, the door control system can include door control units corresponding to the respective doors. The door control system can be independent of the door or can be set in the door. In an embodiment, the door control system can be a gate machine, which receives a gate opening instruction and controls the gate to be opened or to be closed. The open instruction can be a gate opening instruction, which is configured to instruct the door to open, or to instruct to open the gate.

In this embodiment, when the target robot travels to the transition area, the present door corresponding to the target robot is first determined, and then the present door is controlled to be opened and the target robot passes through the present door.

In an embodiment, controlling the present door to be opened and passing through the present door includes the following steps.

First, traveling state information of the target robot is obtained. The traveling state information includes traveling speed information and pose information.

The traveling state information of the target robot includes the traveling speed information and the pose information of the robot. Exemplarily, the pose information includes traveling direction information and positioning information of the robot.

Exemplarily, the target robot obtains its traveling speed information through a speed sensor on the target robot, and can also obtain its positioning information and traveling direction information in real time through a positioning chip of the target robot.

Then, a deceleration area is determined based on a target map of the target robot, the traveling speed information and the pose information, and a buffer area is determined based on the deceleration area.

The target map of the target robot can be a travelable path map, which specifies the traveling area of all running robots, and the target map is composed of multiple travelable paths. The travelable path of the target robot refers to the possible travel route of the target robot planned in the target map. The target map is stored in each robot.

The deceleration area is an area where the target robot reduces its present speed to a preset speed. The buffer area is an area where the target robot establishes a connection channel with the door control system.

For example, the target robot extracts the traveling speed and traveling direction of the target robot from the obtained traveling state information. Firstly, the target robot calculates a deceleration distance of the deceleration area according to the traveling speed of the target robot, then selects a deceleration start line on the travelable path of the target robot, and determines the deceleration area and an end line of the deceleration area according to the deceleration start line and deceleration distance. The end line of the deceleration area serves as a start line of the buffer area. The installation position information of the present door (the coordinates of the present door) is obtained from the target map. A straight line parallel to the horizontal axis and passing through the installation position information of the present door serves as an end line of the buffer area. The buffer area is determined based on the start line of the buffer area and the end line of the buffer area.

When the target robot travels to the deceleration area, the target robot travels at a preset speed and sends a communication connection request to a door control system.

Exemplarily, the target robot obtains the positioning information of the target robot, and determines whether the target robot is located in the deceleration area based on the positioning information. When the target robot determines that the target robot is located in the deceleration area, it reduces the real-time speed of the target robot to the preset speed with a certain acceleration and, within the deceleration area, continuously sends the communication connection request to the door control system.

When the target robot travels to the buffer area, a communication connection result between the target robot and the door control system is obtained. An open instruction is sent to the door control system based on the communication connection result so as to cause the door control system to open the present door in response to receiving the open instruction.

The open instruction is configured to instruct the door control system to open the present door. The duration for which the door control system keeps the present door open can be set by an administrator.

Exemplarily, the target robot obtains the positioning information of the target robot, determines whether the target robot is located in the buffer area according to the positioning information, and then determines whether the target robot has established a connection channel with the door control system. If the target robot is already in the buffer area and has established a connection channel with the door control system, the target robot sends an open instruction to the door control system.

Finally, the target robot passes through the present door.

Exemplarily, the door control system opens the present door in response to receiving the open instruction sent by the target robot, and the target robot passes through the opened present door at the preset speed.

According to this method, the buffer area and the deceleration area for the target robot near the door control system are determined, the speed of the target robot is reduced to a preset speed in the deceleration area, and within the buffer area, an open instruction is sent to the door control system, allowing the target robot to pass through the present door at the preset speed, thereby enabling the target robot to pass through the present door smoothly.

In an embodiment, determining the deceleration area according to the target map, the traveling speed information, and the position information of the target robot includes the following steps.

First, a travelable path of the target robot is obtained from the target map, and a start line of the deceleration area is determined from the travelable path of the target robot.

The target map can be a travelable path map, which is pre-stored in the target robot. The travelable path of the target robot is one of the travelable paths in the target map.

Determining the start line of the deceleration area includes: firstly, determining the preset speed of the target robot when it pass through the present door, then obtaining an average traveling speed and average braking acceleration of the target robot, calculating an average deceleration distance of the target robot according to the average traveling speed and average braking acceleration of the target robot, and then adding a preset distance to the average deceleration distance to obtain a first distance. The installation position information (coordinates) of the present door on the target map is obtained, the ordinate of the present door is taken as a start line, and the first distance from the start line is set as the start line of the deceleration area.

Exemplarily, the start line of the deceleration area is determined based on the installation position information of the present door obtained from the target map, the average speed and the average acceleration of the target robot.

Then, a deceleration distance is determined based on the traveling speed information.

Exemplarily, the present speed of the target robot is obtained from the traveling speed information of the target robot. The target robot obtains the braking acceleration of the target robot, calculates the deceleration time for the target robot to decelerate from the present speed to the preset speed based on the braking acceleration, and calculates the deceleration distance according to the deceleration time.

Finally, the deceleration area is determined based on the pose information, the deceleration distance, and the start line of the deceleration area.

It can be understood that the target robot determines the line that is a deceleration distance away from the start line of the deceleration area in its traveling direction as the end line of the deceleration area, and then determines the area enclosed by the start line of the deceleration area and the end line of the deceleration area on the travelable path of the target robot as the deceleration area.

In this embodiment, the target robot determines the deceleration area based on the traveling direction of the target robot, the deceleration distance, and the start line of the deceleration area, enabling the target robot to pass through the present door at a preset speed, thereby preventing the goods carried by the target robot from falling due to a strong collision with the present door caused by the high speed at which the target robot passes through the present door.

In an embodiment, determining the buffer area based on the deceleration area includes the following steps.

First, the end line of the deceleration area is extracted from the deceleration area, and the end line of the deceleration area serves as a start line of the buffer area.

Exemplarily, the end line of the deceleration area is extracted from the deceleration area, and the end line of the deceleration area serves as the start line of the buffer area.

Then, the installation position information of the present door is obtained from the target map, and an end line of the buffer area is determined based on the installation position information of the present door.

Exemplarily, the installation position information of the present door is obtained from the target map, and the vertical coordinate straight line of the installation position information of the present gate is taken as the end line of the buffer area.

Finally, the buffer area is determined based on the start line of the buffer area and the end line of the buffer area.

Exemplarily, in the travelable path of the target robot, the area enclosed by the start line of the buffer area and the end line of the buffer area is determined as the buffer area.

In this embodiment, the buffer area is determined on the travelable path, and the buffer area is configured for the target robot to establish a connection channel with the door control system and send an open instruction to the door control system, ensuring that the door control system has received the open instruction sent by the target robot when the target robot reaches the present door, thereby allowing the target robot to pass through the present door smoothly.

In an embodiment, obtaining the traveling state information of the target robot includes the following steps.

First, positioning information of the target robot is obtained.

Since the traveling state information of the target robot contains real-time positioning information of the target robot, the target robot needs to obtain the real-time positioning information of the target robot before decelerating.

The target robot traveling at the preset speed and sending the communication connection request to the door control system when the target robot travels to the deceleration area includes the following steps.

It is determined whether the target robot is located in the deceleration area based on the positioning information.

The positioning information of the target robot is compared with the deceleration area to determine whether the target robot is located in the deceleration area.

When the target robot is located in the deceleration area, the speed of the target robot is reduced to the preset speed in the deceleration area, and the communication connection request is continuously sent to the door control system.

Exemplarily, if the obtained determination result is that the target robot is located in the deceleration area, the speed of the target robot is reduced to the preset speed, and then it is detected whether a connection channel has been established between the target robot and the door control system. When a connection channel has been established between the target robot and the door control system, the speed is only reduced to the preset speed in the deceleration area.

In this embodiment, the target robot determines whether it is located in the deceleration area based on the real-time positioning information of the target robot, and starts to establish the connection channel with the door control system in the deceleration area, which saves time compared to the case where the target robot starts to try to establish a connection channel with the door control system when it approaches the present door, thereby improving the efficiency of the target robot in passing through the present door.

In an embodiment, obtaining the communication connection result between the target robot and the door control system when the target robot travels to the buffer area, and based on the communication connection result, sending the open instruction to the door control system so as to cause the door control system to open the present door in response to receiving the open instruction includes: when the target robot travels to the buffer area, detecting whether a connection channel is established between the target robot and the door control system; when a connection channel is established between the target robot and the door control system, sending the open instruction to the door control system, so as to cause the door control system to open the present door in response to receiving the open instruction. When a connection channel has not been established between the target robot and the door control system, the target robot stops moving, continuously sends the connection request to the door control system until a connection channel is established between the target robot and the door control system, and sends an open instruction to the door control system.

In this embodiment, the buffer area and the deceleration area of the target robot near the present door are determined, and the target robot is decelerated to the preset speed in the deceleration area. The open instruction is sent to the door control system in the buffer area, so that the target robot can pass through the present door at the preset speed, thereby increasing the success rate of the target robot in passing through the present door.

In a possible embodiment of the present disclosure, the method can also include broadcasting area occupancy information when the target robot travels into the transition area, the area occupancy information being configured to indicate that the transition area is occupied.

The above area occupancy information is used to notify that the transition area is occupied.

When it is determined that the target robot has entered the transition area, the target robot can send the above-mentioned area occupancy information to other robots in the form of broadcasting. In this way, other robots can accurately be informed that the transition area is occupied and wait, which helps to control each robot that needs to pass through the multiple levels of doors to pass through the multiple levels of doors in sequence.

In a possible embodiment of the present disclosure, the method can also include broadcasting area release information when the target robot moves out of the transition area, the area release information being configured to indicate that the transition area is released.

The above region release information is used to notify that the transition area is released.

When the target robot travels out of the transition area, it can broadcast the area release information to other robots, so that the other robots can be accurately informed that the transition area is released, and they can end waiting and move into the above transition area, which helps to realize that the respective robots pass through the multiple levels of doors in sequence. In practice, the target robot sends the area occupancy information and area release information to other robots in the form of broadcasting, which helps to realize the rapid transmission of information, thereby enabling the respective robots to pass through the multiple levels of doors efficiently and orderly.

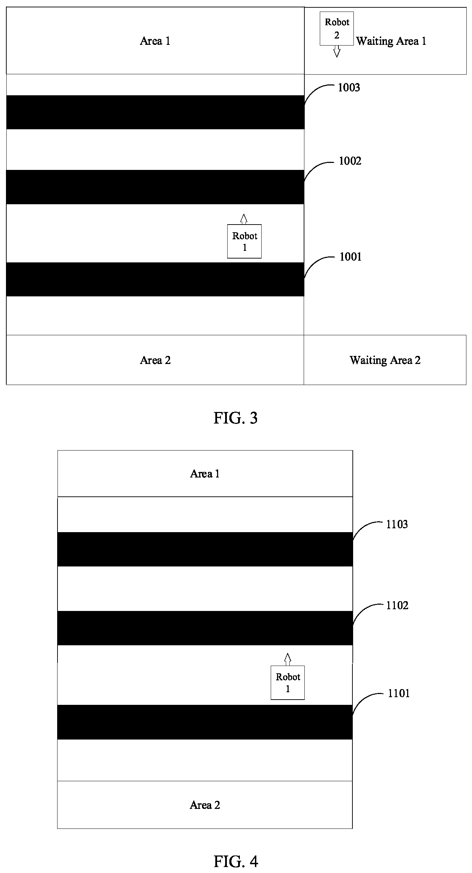

FIG. 3 is a schematic diagram of the effect that multiple robots need to pass through the transition area provided by an embodiment of the present disclosure. In FIG. 3, the multiple levels of doors include three doors: door 1001, door 1002, and door 1003, and there is a spacing distance between the doors. The spacing distance between adjacent doors is not limited in the present disclosure. The above-mentioned multiple levels of doors separate area 1 from area 2. A waiting area 1 can be correspondingly provided at area 1, and a waiting area 2 can be correspondingly provided at area 2. As shown in FIG. 3, there are two target robots that need to pass through the transition area, namely robot 1 and robot 2. When robot 1 travels into the transition area, area occupancy information can be broadcast. In this way, robot 2 can wait in the waiting area 1 outside the transition area. In addition, when robot 1 moves out of the transition area, area release information can be broadcast. In this way, robot 2 can end waiting, leave the waiting area 1, and move into the transition area.

It should be pointed out that in some application scenarios, only one robot can appear in the transition area. In this application scenario, the robot entering the transition area notifies other robots that the transition area is occupied by broadcasting area occupancy information. At this time, the other robots need to wait and cannot enter the transition area.

In other application scenarios, multiple robots may appear in the transition area at the same time. In this application scenario, the transition area is divided into multiple transition sub-areas by the multiple levels of doors, and the area occupancy information can notify the specific occupied transition sub-areas in the transition area, i.e., at most one robot can appear in each transition sub-area in the transition area. In this application scenario, a robot entering a transition sub-area can notify other robots that the transition sub-area is occupied by broadcasting area occupancy information. At this time, other robots that need to enter the transition sub-area need to wait and cannot enter the transition sub-area. It can be understood that in this application scenario, in order to ensure that the two areas separated by the multiple levels of doors are not connected, in the transition area, it is necessary to always ensure that the state of at least one door in the multiple levels of doors is closed.

In practice, in a scenario where multiple robots can appear in the transition area at the same time, before entering the transition area, the target robot usually determines whether there are other robots in the transition area that are traveling in the opposite direction of the target robot. If it exists, the target robot may temporarily not enter the transition area regardless of whether the transition sub-area that presently needs to be entered is occupied. If it does not exist, the target robot can enter the transition sub-area if the transition sub-area that presently needs to be entered is not occupied. In this way, it can be ensured that the respective target robots can pass through the multiple levels of doors efficiently and orderly.

In some implementations, broadcasting the area occupancy information as described above may include broadcasting the area occupancy information to at least one of a co-directional device or an opposite-directional device. The co-directional device is typically another robot traveling in the same direction as the target robot. The opposite-directional device is typically another robot traveling in the opposite direction as the target robot.

Here, by sending area occupancy information to other robots in different traveling directions, it is possible to notify other robots in the corresponding traveling directions to wait to enter the multiple levels of doors, thereby controlling the number of target robots in the transition area.

In practical application, the specific robots to which the area occupancy information is broadcasted depends on the size of the transition area. For example, if the transition area is small, the area occupancy information can be broadcasted to both the co-directional device and the opposite-directional device at the same time. In this case, only one target robot can pass through at a time, and only after this target robot passes through the transition area can other robots enter.

In this embodiment, the respective robots that need to pass through the multiple levels of doors can be controlled to pass through the multiple levels of doors efficiently and orderly, thereby helping to improve the efficiency of controlling the robots.

In an optional implementation of some embodiments, when the state of at least one other door in the multiple levels of doors is closed, controlling the present door to be opened includes controlling the present door to be opened when the state of an adjacent door of the present door is closed.

The adjacent door includes at least one of the following: a forward door and a back door. The forward door is adjacent to the present door in the traveling direction of the target robot, and the back door is adjacent to the present door in the direction opposite to the traveling direction of the target robot.

FIG. 4 is a schematic diagram of the positional relationship between the present door, the forward door, and the back door provided by an embodiment of the present disclosure. As shown in FIG. 4, the multiple levels of doors include three doors: door 1101, door 1102, and door 1103. There is a spacing distance between the doors. The spacing distance between adjacent doors is not limited in the present disclosure. The above-mentioned multiple levels of doors separate area 1 from area 2. In practice, area 1 can be an isolation area, and area 2 can be an external environment. In FIG. 4, the traveling direction of the target robot 1 is from the door 1101 to the door 1102. In this case, for the target robot 1, the door 1102 is the present door, the door 1103 is the forward door, and the door 1101 is the back door. In addition, with reference to FIG. 4, the adjacent door of the door 1101 is the door 1102, the adjacent doors of the door 1102 are the door 1101 and the door 1103, and the adjacent door of the door 1103 can be the door 1102.

Here, the target robot passes through the present door when the state of the adjacent door is closed, which can further ensure that the two areas separated by the multiple door control areas are not connected.

In an optional implementation of some embodiments, controlling the present door corresponding to the target robot to be opened includes: sending an open instruction to the door control device of the present door, the open instruction being configured to trigger the door control device to open the present door.

After the target robot passes through the present door, the method further includes: sending a close instruction to the door control device, or, if it is determined that there are other robots waiting to pass through the present door, sending the close instruction to the door control device after the other robot passes through the present door.

The open instruction is configured to trigger the door control device of the present door to open the present door. The close instruction is configured to trigger the door control device of the present door to close the present door.

In practice, the door control device corresponding to the present door is typically a device used to control the present door to be opened or closed. In practical application, one door control device can control one door, or one door control device can control multiple doors.

Here, when the state of the present door is closed and there are other doors in the closed state in the multiple levels of doors, the target robot can send the open instruction to the door control device of the present door to open the present door.

After the target robot passes through the present door, the target robot can send a close instruction to the door control device of the present door to close the present door. In practical application, before the target robot sends the close instruction to the door control device of the present door, it can also determine whether there are other robots that need to pass through the present door. As an example, the target robot can interact with other robots through the network to determine whether there are other robots waiting to pass through the present door. In the case that there are other robots waiting to pass through the present door, the target robot can temporarily not send the close instruction to the door control device of the present door. In the case that there is no other robot waiting to pass through the present door, the target robot can send the close instruction to the door control device of the above-mentioned present door. According to this implementation method, the efficiency of controlling the target robot can be further improved by accurately and effectively controlling each door in the multiple levels of doors.

In an optional implementation of some embodiments, sending the open instruction to the door control device of the present door includes: when there are multiple robots in the door control area of the present door, determining a first robot configured to send the open instruction and a second robot configured to send the close instruction from the multiple robots, the multiple robots including the target robot and the other robots; and sending the open instruction to the door control device by the first robot.

The multiple robots can include other robots that are to pass through the present door and located in the door control area of the present door, and the target robot.

The first robot is a robot configured to send an open instruction. The second robot is a robot configured to send a close instruction.

When there are multiple robots in the door control area of the present door, the target robot can select the first robot and the second robot from the multiple robots. For example, the first robot and second robot can be determined by random selection. It is also possible to select the robot closest to the present door as the first robot, and select the robot farthest from the present door as the second robot.

It should be noted that before the second robot sends the close instruction, it can determine whether there are other robots that have not passed through the present door. For example, the second robot can interact with other robots through the network to determine whether there are other robots that have not passed through the present door. When there are other robots that have not passed through the present door, the second robot can temporarily not send the close instruction to the door control device of the present door. When there are no other robots that have not passed through the present door, the second robot can send the close instruction to the door control device of the present door.

It should be pointed out that when there are multiple robots in the door control area of the present door, selecting one robot to send the open instruction and selecting one robot to send the close instruction can reduce the number of instructions and reduce the frequency of opening and closing the present door, compared to the case that each robot needs to send an open instruction and a close instruction. It helps to achieve more efficient and orderly control of multiple robots that need to pass through the multiple levels of doors, thereby further improving the efficiency of controlling the robots.

In practice, the robot with the highest order is usually selected as the first robot, and the robot with the lowest order is selected as the second robot. When the order of each robot is the same, any robot can be selected as the first robot, and any robot can be selected as the second robot.

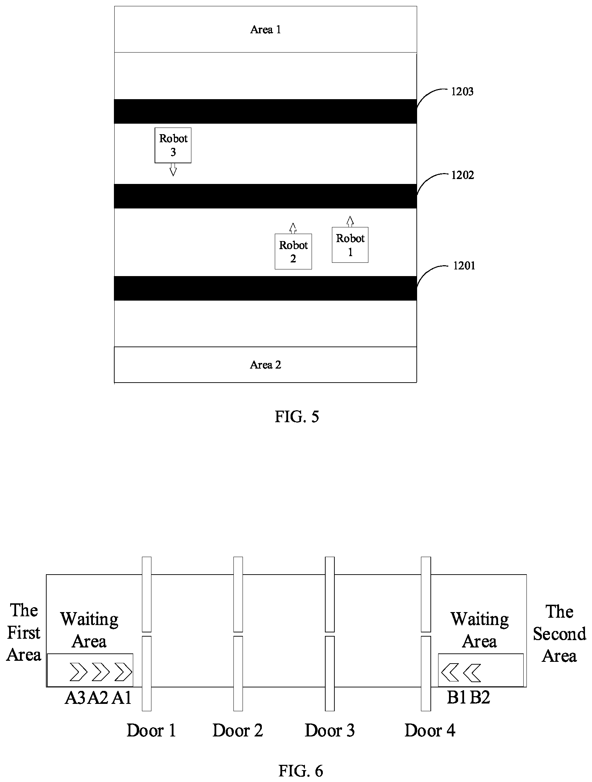

FIG. 5 is a schematic diagram of the effect of the relative position relationship between multiple robots provided in an embodiment of the present disclosure. As shown in FIG. 5, the multiple levels of doors include three doors: door 1201, door 1202, and door 1203, and there is a spacing distance between the doors. The spacing distance between adjacent doors is not limited in the present disclosure. The above-mentioned multiple levels of doors separate area 1 from area 2. In practice, the area 1 can be an isolation area, and the area 2 can be an external environment. With reference to FIG. 5, when the present door is the door 1202, the target devices in the door control area of the present door are robot 1, robot 2, and robot 3. Combined with the travel-related information of each robot, it can be determined that the passing order of each robot can be robot 3-robot 1-robot 2. In this case, robot 3 can serve as the first robot, and robot 2 can serve as the second robot.

In this embodiment, the travel-related information of each robot is used to sort the robots, and then the first robot and the second robot are selected based on a sorting result, which is more practical. In practice, for robots traveling in the same direction, the robot that can pass through the present door faster usually is sorted more forward. This helps the robots pass through the present door efficiently and orderly, thereby further improving the efficiency of controlling the robots.

In optional implementations of some embodiments, before the target robot moves to the door control area corresponding to the present door, the robot traversal method further includes the following steps.

First, it is detected whether the transition sub-area corresponding to the present door is occupied. The transition sub-area is a part of the transition area that must be passed to get to the present door.

The transition sub-area corresponding to the present door is a necessary area in the transition area for going to the present door. With reference to FIG. 4, for the target robot 1, its traveling direction is from area 2 to area 1, and the present door is the door 1102. In this case, the transition sub-area corresponding to the door 1102 is the area between the door 1101 and the door 1102. For the convenience of description, the area between the door 1101 and the door 1102 is referred to as area A. In practice, for each door, the door control area on the side of the transition sub-area corresponding to the door belongs to the transition sub-area corresponding to the door. For further example, the door control area corresponding to the door 1102 is the area obtained by extending a preset distance from the position of the door 1102 to the direction of the door 1101 and door 1103, respectively. For the target robot 1, the transition sub-area corresponding to the door 1102 is the above-mentioned area A. In this case, the door control area on the side of area A corresponding to the door 1102 belongs to area A.

Before the target robot enters the transition sub-area of the present door, it can first detect whether the transition sub-area of the present door is occupied.

In practice, the target robot can detect whether the transition sub-area corresponding to the present door is occupied by receiving area occupancy information sent by other robots in the transition sub-area. In practice, area occupancy information sent by other robots in the transition sub-area corresponding to a certain door can indicate that the transition sub-area corresponding to the door is occupied.

When the transition sub-area corresponding to the present door is occupied, the target robot does not enter the door control area corresponding to the present door temporarily.

When the transition sub-area corresponding to the present door is occupied, the target robot will not enter the gating area of the present door temporarily.

When the transition sub-area corresponding to the present door is not occupied, the target robot enters the door control area corresponding to the present door.

When the transition sub-area corresponding to the present door is not occupied, the target robot enters the gating area of the present door.

In practical application, before the target robot moves into the transition area, it is usually determined whether there are other robots in the transition area that are traveling in the opposite direction of the target robot. When there are other robots in the transition area that are traveling in the opposite direction of the target robot, the target robot will not enter the door control area of the present door regardless of whether the transition sub-area corresponding to the present door is occupied. When there is no other robot in the transition area that are traveling in the opposite direction of the target robot, the target robot will enter the door control area of the present door when the transition sub-area corresponding to the present door is not occupied.

In this embodiment, the target robot can determine whether to enter the door control area corresponding to the present door based on the occupancy of the transition sub-area of the present door to be passed through. This can ensure that between every two doors or between a door and a partitioned area, only one robot can pass through at a time, which helps to further ensure that the two areas separated by the multiple levels of doors are not connected. When area 1 is a special isolation area, such as an infectious disease isolation area, a potential risk of virus transmission caused by multiple robots in the same space can be avoided.

In an embodiment, the transition area is provided with multiple levels of doors. Controlling the present door to be opened and passing through the present door includes the following steps.

First, a target map is obtained. The target map includes multiple levels of doors arranged in the transition area connecting the first area and the second area.

The target map refers to the map used during the running of the target robot. The target map can be a global map or a local map. The multiple levels of doors refer to a set of at least two doors. The door refers to a device that separates the transition area. The door includes but is not limited to communication functions, and opening and closing functions. In a possible embodiment, the door can be a gate in a gate machine. The first area and the second area refer to two areas separated by the multiple levels of doors. For example, as shown in FIG. 6, the transition area connects the first area and the second area, and the multiple levels of doors consisting of four doors are arranged in the transition area, and the isolation of the first area and the second area is achieved by the multi-level gate.

Exemplarily, the target robot obtains the target map used during running. The target map includes the transition area connecting the first area and the second area, and the multiple levels of doors arranged in the transition area.

In an embodiment, the target robot obtains a target map used during running. The target map includes a transition area and multiple levels of doors that the target robot is to pass through. The target robot obtains attribute information corresponding to the transition area, and based on the attribute information, determines that any two adjacent doors in the multiple levels of doors cannot be opened at the same time.

In an embodiment, the target robot obtains a target map used during running. The target map includes a transition area and multiple levels of doors that the target robot is to pass through. The target robot obtains attribute information corresponding to the transition area, and based on the attribute information, determines that the multi-level gate cannot all be opened at the same time.

Then, a first width of the transition area and a second width of the target robot are obtained, and based on the first width and the second width, a number of robots in parallel that are allowed to travel in parallel in the transition area is determined.

The first width refers to the width of the transition area. The second width refers to the width of the target robot. For example, if the target robot is a round sweeping robot, a diameter of the sweeping robot is the second width. In a possible embodiment, the other robots and the target robot have the same width. The number of robots in parallel refers to the maximum number of robots that can travel side by side in the transition area. The number of robots in parallel can be one or more.

Exemplarily, the target robot obtains a first width of the transition area from the target map, obtains a second width of the target robot from a performance parameter list of the target robot, divides the first width by the second width to obtain the number of robots in parallel allowed to travel in parallel in the transition area.

In an embodiment, the target robot obtains a first width of a target passageway from the target map, obtains a second width of the target robot from the drawing of the target robot, divides the first width by the second width to obtain the number of robots in parallel allowed to travel in parallel in the transition area.

Then, based on the number of robots in parallel and the position information of each of the other robots in the transition area, the present door corresponding to the target robot is controlled to be opened, and the present door is passed through.

The position information refers to data representing the position of the robot in the target map. The position information can be represented by coordinates or longitude and latitude.

Exemplarily, the target robot receives the position information of each of the other robots, determines the position of each of the other robots in the target map based on the position information of each of the other robots, determines whether a condition for opening the present door corresponding to the target robot is satisfied based on the number of robots in parallel and the position of each of the other robots in the target map, and controls the present door to be opened if the condition for opening the present door is satisfied, and the target robot passes through the present door.

In this embodiment, the target robot determines the number of robots in parallel allowed to travel in the transition area based on the first width of the transition area and the second width of the target robot. The target robot controls the passage of the target robot based on the number of robots in parallel, avoiding congestion in the transition area that causes the robot to be unable to pass through the transition area. Then, based on the position information of each of the other robots, the position of each of the other robots in the target map is determined. Based on the number of robots in parallel allowed to travel in parallel in the transition area and the position of each of the other robots in the target map, the present door corresponding to the target robot among the multiple levels of doors is controlled to be opened, which can not only satisfy the opening requirements of the multiple levels of doors, but also can timely control the present door to be opened based on the number of robots in parallel and the position of other robots, ensuring that the transition area is unobstructed and the robots can pass through the transition area in sequence, thereby improving the efficiency of the robot passing through the transition area.

In an embodiment, the number of robots in parallel is one, and the robot traversal method further includes the following steps(a)-(c).

(a). when the target robot is located in a target waiting area, based on the position information of each the other robots, a determination result of whether there are other robots in an opposite waiting area is obtained. The target waiting area and the opposite waiting area are respectively located at both ends of the transition area.

The target waiting area refers to the waiting area where the target robot is located, and the waiting area is located at one end of the transition area. The target waiting area can be a specific area demarcated at one end of the transition area, or it can be an area at a preset distance from the transition area. The opposite waiting area refers to the waiting area located at the other end of the transition area. The target waiting area and the opposite waiting area are located at the two ends of the transition area, respectively. For example, as shown in FIG. 6, taking robot A1 as the target robot, the waiting area where robot A1, robot A2, and robot A3 are located is the target waiting area, and the waiting area where robot B1 and robot B2 are located is the opposite waiting area.

Exemplarily, when the target robot is located in the target waiting area, the target robot determines the position of each of the other robots in the target map based on the position information of each of the other robots, and obtains a determination result of whether there are other robots in the opposite waiting area based on the position of each of the other robots in the target map.

(b). a passing order of the target robot in the target waiting area is determined based on the position information of each of the other robots.

The passing order refers to the order in which the target robots are arranged in the target waiting area. The passing order will change with the movement of other robots. For example, when the target robot A3 reaches the target waiting area, there are two other robots, robot A1 and robot A2, in the target waiting area, and the number of robots in parallel in the transition area is one. In this case, the passing order of the target robot A3 is the third. When robot A1 leaves the target waiting area, the passing order of the target robot A3 is the second.

Exemplarily, when the number of robots in parallel is one and the target robot is located in the target waiting area, the target robot counts the number of other robots located in the target waiting area based on the position information of each of the other robots to obtain a counted number of other robots in the target waiting area. The counted number is added by one to obtain the passing order of the target robot in the target waiting area.

(c). when it is determined that the target robot does not need to wait based on the determination result and the passing order, based on the number of robots in parallel and the position information of each of the other robots in the transition area, the present door corresponding to the target robot is controlled to be opened, and the present door is passed through.

Exemplarily, based on the determination result and the passing order, if it is determined that the target robot does not need to wait, the present door corresponding to the target robot is controlled to be opened based on the number of robots in parallel and the position information of each of the other robots in the transition area, and the target robot passes through the present door. Based on the determination result and the passing order, if it is determined that the target robot needs to wait, step (a) and step (b) are repeated.

In this embodiment, when the number of robots in parallel in the transition area is one and the target robot is located in the target waiting area, firstly, based on the position information of each other robot, it is determined whether there are other robots in the opposite waiting area and the passing order of the target robot in the target waiting area. And then, based on the determination result and the passing order, it is determined whether the target robot needs to wait, so as to prevent the target robot from entering the transition area and causing congestion in the transition area when it needs to wait. In the case where the target robot does not need to wait, based on the number of robots in parallel and the position information of each of the other robots in the transition area, the present door corresponding to the target robot is controlled to be opened, and the present door is passed through, achieving the purpose that the transition area is unobstructed and the robots pass through the transition area in sequence, improving the efficiency of the robot passing through the transition area.

In an embodiment, determining that the target robot does not need to wait based on the determination result and the passing order includes the following steps.

When the determination result is that there are no other robots in the opposite waiting area and the passing order is first, it is determined that the target robot does not need to wait.

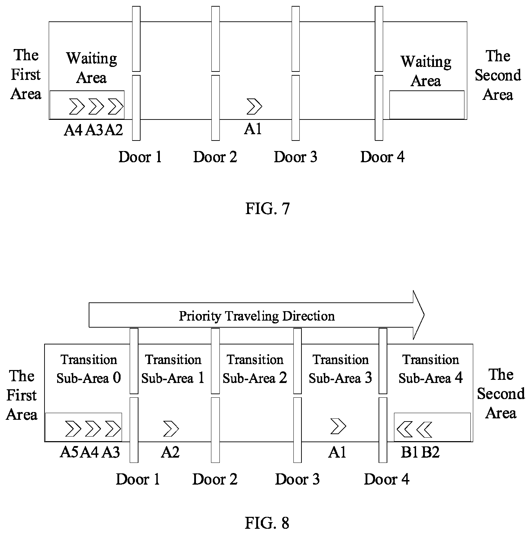

Exemplarily, when the number of robots in parallel in the transition area is one and the target robot is in the target waiting area, if the target robot determines that there are no other robots in the opposite waiting area and the passing order of the target robot is the first, it is determined that the target robot does not need to wait. For example, as shown in FIG. 7, assuming that the target robot is A2, the robot A2 determines that there are no other robots in the opposite waiting area and the passing order is the first, then it determines that the target robot A2 does not need to wait.

When the determination result is that there are other robots in the opposite waiting area, a priority traveling direction corresponding to the transition area and a target traveling direction of the target robot are obtained. When the target traveling direction is the same as the priority traveling direction and the passing order is the first, it is determined that the target robot does not need to wait.

The priority traveling direction refers to the traveling direction that gives priority to pass through the transition area. The target traveling direction refers to the traveling direction of the target robot passing through the transition area. For example, as shown in FIG. 8, traveling from the first area to the second area is one traveling direction, and traveling from the second area to the first area is another traveling direction. If the priority traveling direction corresponding to the transition area is from the first area to the second area, then A3 located in the waiting area does not need to wait, even if the passing order of B1 is the first, but B1 needs to wait because the traveling direction of B1 is inconsistent with the priority traveling direction.

Exemplarily, when the number of robots in parallel in the transition area is one and the target robot is located in the target waiting area, if the target robot determines that there are other robots in the opposite waiting area, the priority traveling direction corresponding to the transition area and the target traveling direction of the target robot are obtained. The priority traveling direction and the target traveling direction are compared, and when the target traveling direction is the same as the priority traveling direction and the passing order of the target robot is the first, it is determined that the target robot does not need to wait.

In this embodiment, when the number of robots in parallel in the transition area is one and the target robot is located in the target waiting area, it is first determined whether there are other robots in the opposite waiting area. When there are no other robots in the opposite waiting area, the robots in the target waiting area pass through the transition area in order. The robots in the target waiting area pass through the transition area in sequence, which avoids congestion in the transition area and improves the efficiency of the robots passing through the transition area. When there are other robots in the opposite waiting area, the robots in the target waiting area and the opposite waiting area that travel in the same direction as the priority traveling direction will pass through the transition area first, and the robots that travel in the opposite direction of the priority traveling direction will wait, so as to avoid the robots in the target waiting area and the opposite waiting area moving at the same time and causing congestion in the transition area, thus ensuring that the transition area is unobstructed and improving the efficiency of the robot passing through the transition area.

In an embodiment, the number of robots in parallel is at least two, and the robot traversal method further includes the following steps.

When the target robot is located in the target waiting area, based on the position information of each of the other robots, a determination result of whether there are other robots in the opposite waiting area is obtained.

If the determination result is that there are no other robots in the opposite waiting area, the number of robots in parallel is taken as a target number of the robots in a parallel group in the target waiting area.

The parallel group refers to a group of robots traveling in parallel. The target number of the robots refers to the number of the robots included in the parallel group.

Exemplarily, if the determination result is that there are no other robots in the opposite waiting area, the target robot obtains the number of robots in parallel in the transition area, and uses the number of robots in parallel as the target number of the robots in the parallel group in the target waiting area.

If the determination result is that there are other robots in the opposite waiting area, the priority traveling direction corresponding to the transition area and the target traveling direction of the target robot are obtained, and the target number of the robots in the parallel group in the target waiting area is determined based on the priority traveling direction, the target traveling direction and the number of robots in parallel.

Exemplarily, if the determination result is that there are other robots in the opposite waiting area, the target robot obtains the priority traveling direction corresponding to the transition area and the target traveling direction of the target robot, and compares the priority traveling direction with the target traveling direction to obtain a comparison result. Based on the comparison result and the number of the robots in parallel, the target number of the robots in the parallel group in the target waiting area is determined.

In an embodiment, if the determination result is that there are other robots in the opposite waiting area, the target robot obtains the priority traveling direction corresponding to the transition area and the target traveling direction of the target robot, and compares the priority traveling direction with the target traveling direction to obtain a target comparison result. A correspondence between comparison results and target ratios is obtained, including a first ratio corresponding to the comparison result that the target traveling direction is the same as the priority traveling direction and a second ratio corresponding to the comparison result that the target traveling direction is the different from the priority traveling direction. The target ratio is obtained based on the target comparison result and the correspondence, and the target number of the robots in the parallel group in the target waiting area is obtained based on the target ratio and the number of the robots in parallel.

Then, based on the target number of the robots, the passing order of a target parallel group to which the target robot belongs in the target waiting area is determined.

Exemplarily, the target robot determines the counted number of other robots already being in the target waiting area based on the position information of the other robots, and the passing order of the target parallel group to which the target robot belongs in the target waiting area is determined based on the counted number and the target number of the robots.

When it is determined based on the passing order that the target robot does not need to wait, based on the number of robots in parallel and the position information of each of the other robots in the transition area, the present door corresponding to the target robot is controlled to be opened and the present door is passed through.

In this embodiment, when the number of robots in parallel in the transition area is at least two and the target robot is located in the target waiting area, it is first determined whether there are other robots in the opposite waiting area. When there are no other robots in the opposite waiting area, the robots in the target waiting area pass through the transition area sequentially in accordance with the order of the parallel groups. The robots in the target waiting area pass through the transition area in sequence, which improves the efficiency of the robots passing through the transition area. When there are other robots in the opposite waiting area, based on the priority traveling direction, the target traveling direction and the number of robots in parallel, the target number of the robots in the parallel group in the target waiting area is determined. The robots in the target waiting area form parallel groups based on the target number of the robots and pass through the transition area sequentially in accordance with the order of the parallel groups, avoiding congestion in the transition area, thus ensuring that the transition area is unobstructed and improving the efficiency of the robot passing through the transition area.

In an embodiment, the number of robots in parallel is one. Based on the number of robots in parallel and the position information of each of the other robots in the transition area, controlling the present door corresponding to the target robot to be opened and passing through the present door includes the following steps.

In a first step, a target position information of the target robot is obtained.

The target position information refers to the present position information of the target robot.

In a second step, a present transition sub-area, a present door and a reference door corresponding to the target robot are determined based on the target position information and the installation position information of each door in the multiple levels of doors. The present transition sub-area is the first transition sub-area presently to be passed through by the target robot. The present door is the first door presently to be passed through by the target robot, and the reference door is the second door presently to be passed through by the target robot.

The installation position information refers to the position information of the door. The transition sub-area refers to a partial passageway divided by the multiple levels of doors in the transition area. For example, as shown in FIG. 8, four doors divide the transition area into five transition sub-areas, namely transition sub-area 0, transition sub-area 1, transition sub-area 2, transition sub-area 3, and transition sub-area 4. Assuming that A3 is the target robot, then transition sub-area 1 is the first transition sub-area to be passed through by A3, i.e., transition sub-area 1 is the present transition sub-area for A3, door 1 is the first door to be passed through by A3, i.e., door 1 is the present door for A3, and door 2 is the second door to be passed through by A3, i.e., door 2 is the reference door for A3.

Exemplarily, the target robot obtains the installation position information of each door in the multiple levels of doors from the target map, calculates the distance between each door and the target robot in the traveling direction based on the target position information and the installation position information of each door, takes the door corresponding to the smallest distance as the present door, takes the door corresponding to the second smallest distance as the reference door, and takes the transition sub-area between the present door and the reference door as the present transition sub-area.

In a third step, based on the position information of each other robot, it is determined that there are no other robots in the present transition sub-area.

Exemplarily, the target robot determines the position of each other robot in the target map based on the position information of each other robot, and determines whether there are other robots in the present transition sub-area based on the position of each other robot in the target map. When there are other robots in the present transition sub-area, the target robot repeatedly performs the third step to obtain the updated position information of each of the other robots until it is determined that there are no other robots in the present transition sub-area, and then the target robot performs a fourth step. When there are no other robots in the present transition sub-area, the target robot performs the fourth step.

In the fourth step, the state of the reference door is obtained. If the state is closed, the present door is controlled to be opened and the present door is passed through.

The state refers to the state of the door. The state includes, but is not limited to, opened, opening, closing, and closed. Closed means that the door is in a closed state.

Exemplarily, the target robot obtains the state of the reference door. If the state of the reference door is closed, the target robot sends an open instruction to the present door to control the present door to be opened, and the target robot passes through the present door.

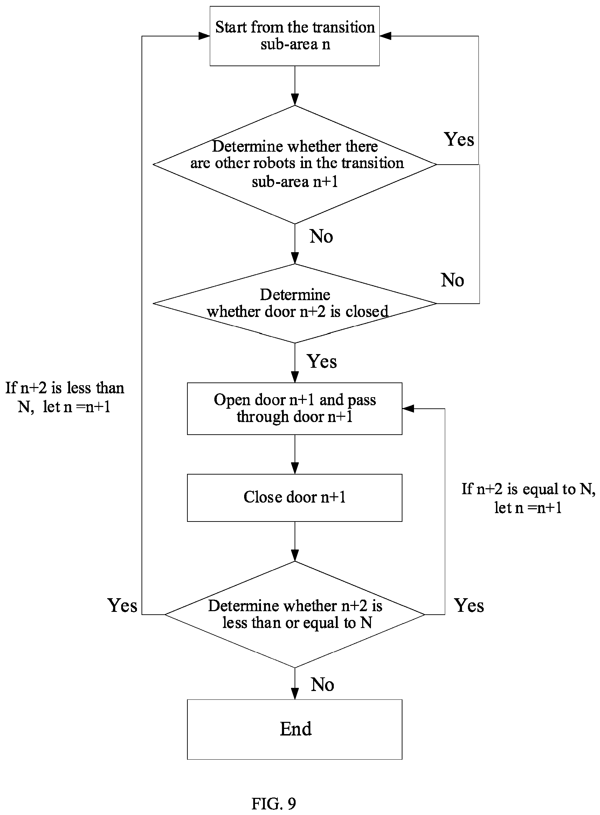

In an embodiment, when the number of robots in parallel is one, the target robot is located in the target waiting area, and the target robot does not need to wait, the flow chart of the target robot passing through the multiple levels of doors is shown in FIG. 9. Assuming that the target robot passes through the transition area shown in 11, where n represents a serial number, the value of n starts from 0, N represents the maximum serial number, N is equal to 4, and the target robot starts from the transition sub-area n. The target robot determines whether there are other robots in the transition sub-area n+1. If there are other robots in the transition sub-area n+1, the target robot continues to start from the transition sub-area n. If there are no other robots in the transition sub-area n+1, it is determined whether the door n+2 is closed. If it is not closed, the target robot continues to start from the transition sub-area n. If it is closed, the door n+1 is opened, the target robot pass through the door n+1. The target robot enters the transition sub-area n+1, closes the door n+1, and then determines whether n+2 is less than or equal to N. If n+2 is less than or equal to N, and n+2 is less than N, then let n =n+1, and the target robot repeats the above steps. If n+2 is less than or equal to N, and n+2 is equal to N, then let n =n+1, the target robot opens the door n+1, and pass through the door n+1. If n+2 is greater than N, the target robot has passed through the multiple levels of doors in the transition area.

In this embodiment, the target robot determines whether there are other robots in the present transition sub-area based on the position information of each other robot. The target robot controls the present door to be opened only when there are no other robots in the present transition sub-area and the reference door is in a closed state, which not only prevents the target robot and other robots in the present transition sub-area from opening the present door and the reference door at the same time, but also prevents the target robot from opening the present door during the opening or closing process of the reference door, avoiding the door in the transition area being locked caused by two adjacent doors being opened at the same time, thereby ensuring that the transition area is unobstructed and improving the efficiency of the robot passing through the transition area.

In an embodiment, the number of robots in parallel is at least two, and the target robot is an active robot. Based on the number of robots in parallel and the position information of each of the other robots in the transition area, controlling the present door corresponding to the target robot to be opened and passing through the present door includes the following steps.
(1). the target traveling direction and target position information of the target robot are obtained.

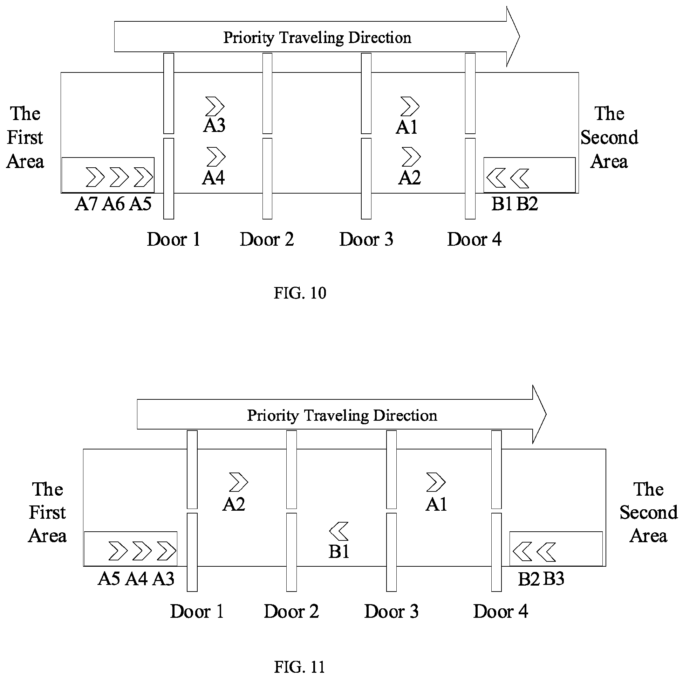

The active robot is a robot that controls the door to be opened or closed. The passive robot is a robot that does not control the door to be opened and closed. It can be understood that among multiple robots that need to pass through the same door, one of the robots is the active robot, and the remaining robots are the passive robots. The active robot controls the door to be opened and closed, and the passive robot passes through the door when the door is open. For example, as shown in FIG. 10, A1 and A2 form a parallel group, and A3 and A4 form a parallel group. If the robot that is first in order in the parallel group is set as the active robot, A1 and A3 are active robots, A2 and A4 are passive robots, and the present door of A1 and A2 is door 4, then A1 controls the door 4 to be opened and closed, and A2 waits when the door 4 is closed and pass through the door 4 when the door 4 is opened. For example, as shown in FIG. 11, A2 and B1 need to pass through the door 2. If the robot whose traveling direction is the same as the priority traveling direction is set as the active robot, then A2 is the active robot and B1 is the passive robot. A2 controls the door 2 to be opened and closed, and B1 passes through the door 2 when the door 2 is opened.

In an embodiment, when there are multiple robots in the door control area of the present door, including a target robot and at least one other robot, the active robot configured to send the open instruction and the close instruction is determined from the multiple robots, and the open instruction is sent to the door control device by the active robot.

(2). based on the target position information and the installation position information of each door in the multiple levels of doors, the present transition sub-area, the present door and the reference door corresponding to the target robot are determined. The present transition sub-area is the first transition sub-area to be passed through by the target robot, the present door is the first door to be passed through by the target robot, and the reference door is the second gate to be passed through by the target robot.

(3). based on the traveling direction and position information of each other robot and the target traveling direction, it is determined that there are no other robots with the same traveling direction as the target traveling direction in the present transition sub-area.

Exemplarily, the target robot determines the position of each other robot in the target map based on the position information of each other robot, and determines whether there are other robots in the present transition sub-area based on the position of each other robot in the target map. When there are other robots in the present transition sub-area, the traveling directions of the other robots in the present transition sub-area are obtained, and the traveling directions are compared with the target traveling direction. If the traveling directions are all different from the target traveling direction, it is determined that there are no other robots with the same traveling direction as the target traveling direction in the present transition sub-area, and step (4) is executed. When there is at least one other robot with the same traveling direction as the target traveling direction, it is determined that there are other robots with the same traveling direction as the target traveling direction in the present transition sub-area, and the updated position information of each robot are repeatedly obtained and step (3) are repeatedly executed until it is determined that there are no other robots with the same traveling direction as the target traveling direction in the present transition sub-area, and step (4) is executed. When there are no other robots in the present transition sub-area, step (4) is executed.

(4). the state of the reference door is obtained. If the state is closed, the present door is opened and the present door is passed through.

Exemplarily, the target robot obtains the state of the reference door. If the state of the reference door is open, the process of obtaining the state of the reference door is repeated until the state of the reference door is closed, then the present door is controlled to be opened, and the target robot passes through the present gate. If the state of the reference door is closed, the present door is controlled to be opened and the target robot passes through the present door.

In an embodiment, the above method also includes: when there are other robots in the opposite waiting area, determining a candidate robot based on the priority traveling direction corresponding to the transition area and the traveling direction of each other robot. In an possible embodiment, the other robots with the same traveling direction as the priority traveling direction are determined as the candidate robots, and one candidate robot in the parallel group is determined as the active robot. The active robot controls the door to be opened or closed. When there are no other robots in the opposite waiting area, one robot in the parallel group is determined as the active robot based on a preset method.

In an embodiment, the above method further includes: when there are multiple robots waiting to pass in the door control area of the present door, and the multiple robots waiting to pass include the target robot and at least one other robot, determining a first target device configured to send the open instruction and a second target device configured to send the close instruction from the multiple robots waiting to pass. The first target device serves as the active robot, and the open instruction is sent to the door control device by the active robot.

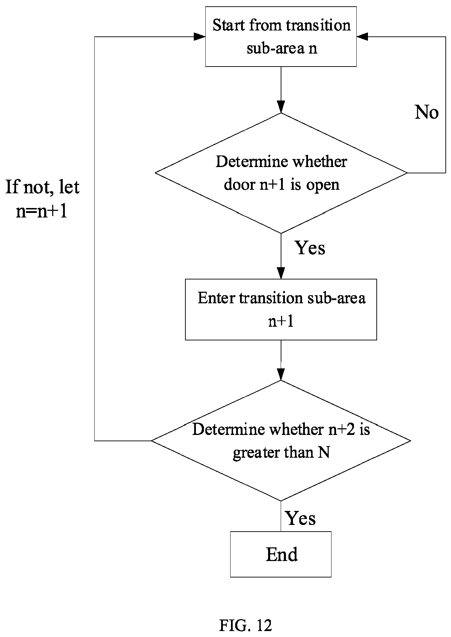

In an embodiment, when the target robot is the passive robot, a flow chart of the target robot passing through multiple levels of doors is shown in FIG. 12. The target robot passes through the transition area shown in FIG. 10, where n represents a serial number, the value of n starts from 0, N represents the maximum serial number, N is equal to 4, and the target robot starts from transition sub-area n. The target robot determines whether the door n+1 is opened. If the door n+1 is not opened, the target robot continues to start from transition sub-area n. If the door n+1 is opened, the target robot pass through the door n+1. The target robot enters the transition sub-area n+1 and determines whether n+2 is greater than N. If n+2 is less than or equal to N, let n =n+1, and the above steps are repeated. If n+2 is greater than N, the target robot has passed through the multiple levels of doors in the transition area.

In this embodiment, the active robot controls the door to be opened or closed, which can prevent the door from being locked caused by multiple robots opening and closing the door at the same time. The door only needs to be opened once for the multiple robots in the parallel group to pass through the door, avoiding repeated opening and closing of the door, thereby improving the efficiency of the robots passing through the door, and further improving the efficiency of the robots passing through the transition area.

In an embodiment, the robot traversal method further includes the following steps.

First, when the target robot passes through the present gate, updated position information and updated traveling direction of each other robot are obtained.

Then, based on the updated position information of each other robot, it is determined that other robots in the target parallel group to which the target robot belongs are located in the present transition sub-area.

Based on the updated position information and updated traveling direction of each other robot, it is determined that there are no other robots in the present transition sub-area traveling in the direction opposite to the target traveling direction.

Then, the present door is controlled to be closed.

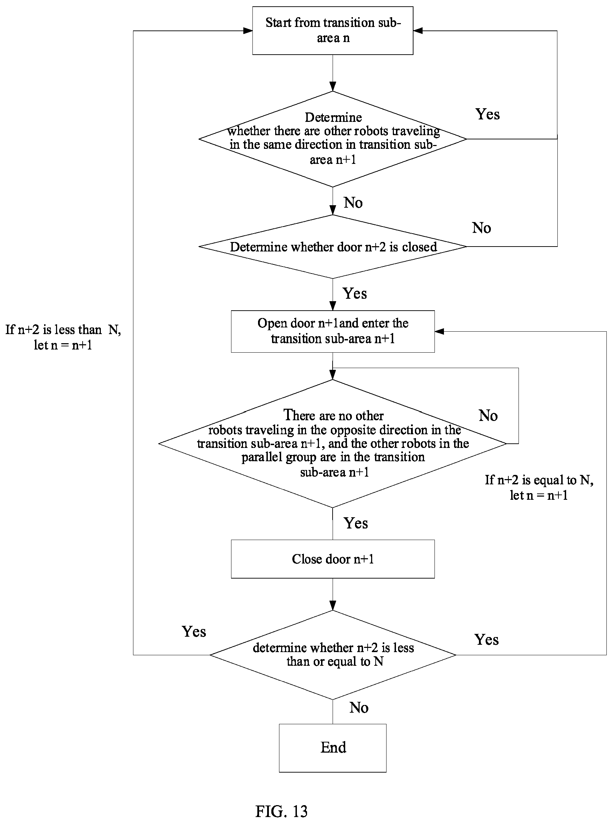

In an embodiment, when the target robot is an active robot, a flow chart of the target robot passing through multiple levels of doors is shown in FIG. 13. Assuming that the target robot passes through the transition area shown in FIG. 11, where n represents a serial number, the value of n starts from 0, N represents the maximum serial number, N is equal to 4, and the target robot starts from the transition sub-area n. The target robot determines whether there are other robots traveling in the same direction in the transition sub-area n+1. If yes, the target robot continues to start from the transition sub-area n. If not, it determines whether the door n+2 is closed. If the door n+2 is not closed, the target robot continues to start from the transition sub-area n. If the door n+2 is closed, the door n+1 is opened, the target robot passes through the door n+1 and enters the transition sub-area n+1, and determines whether there are other robots traveling in the opposite direction in the transition sub-area n+1 and whether the other robots in the parallel group are in the transition sub-area n+1. When there are other robots traveling in the opposite direction in the transition sub-area n+1, or any of the other robots in the parallel group is not in the transition sub-area n+1, the determination of whether there are other robots traveling in the opposite direction in the transition sub-area n+1 and whether the other robots in the parallel group are in the transition sub-area n+1 are repeated. When there are no other robots traveling in the opposite direction in the transition sub-area n+1 and all the other robots in the parallel group are in the transition sub-area n+1, the door n+1 is closed. Then, it is determined whether n+2 is less than or equal to N. If n+2 is less than or equal to N, and n+2 is less than N, let n = n+1, and then the above steps are repeated. If n+2 is less than or equal to N, and n+2 is equal to N, then let n = n+1, the door n+1 is opened, and the target robot passes through the door n+1 and enters the transition sub-area n+1. If n+2 is greater than N, the target robot has passed through the multiple levels of doors in the transition area.

In this embodiment, when the active robot enters the present transition sub-area, it is determined whether other robots in the present transition sub-area that travels in the direction opposite to the target traveling direction has passed through the present door, and whether all other robots in the target parallel group to which the target robot belongs has passed through the present door. The door only needs to be opened once for the multiple robots in the parallel group and the robots located in the present transition sub-area traveling in the direction opposite to the target traveling direction to pass through the door, avoiding repeated opening and closing of the door, and improving the speed of robots passing through the multiple levels of doors. In addition, the present door is closed in time, which shortens the waiting time for the next other robot to pass through the present door, and further improves the efficiency of the robot passing through the multiple levels of doors.

It should be understood that although the steps in the flow charts involved in the above-mentioned embodiments are shown in sequence as indicated by the arrows, these steps are not necessarily executed in the order indicated by the arrows. Unless explicitly stated in this article, there is no strict order restriction on the execution of these steps, and these steps can be executed in other orders. Moreover, at least some of the steps in the flow charts involved in the above embodiments may include multiple steps or multiple stages. These steps or stages are not necessarily executed at the same time, but can be completed at different times. The execution order of these steps or stages is not necessarily sequential, but can be performed in turn or alternately with other steps or at least part of the steps or stages in other steps.

In an embodiment, a robot is provided, including a memory and a processor. A computer program is stored in the memory. When the processor, when executes the computer program, performs the steps in the above method embodiments.

In an embodiment, a computer-readable storage medium is provided, on which a computer program is stored. When the computer program is executed by a processor, the steps in the above method embodiments are implemented.

In an embodiment, a computer program product is provided, including a computer program that implements the steps in each of the above method embodiments when executed by a processor.

## Claims

1. A robot traversal method, the method being applied to a target robot, and the target robot being any robot among multiple robots that need to pass through a transition area, the method comprising:
determining, when the target robot travels to the transition area, a present door corresponding to the target robot in the transition area (202); and
controlling the present door to be opened and passing through the present door (204);
**characterized in that** the method further comprises:
broadcasting area occupancy information when the target robot travels into the transition area, the area occupancy information being configured to indicate that the transition area is occupied; and
broadcasting area release information when the target robot travels out of the transition area, the area release information being configured to indicate that the transition area is released.

2. The method according to claim 1, wherein controlling the present door to be opened and passing through the present door comprises:
obtaining traveling state information of the target robot, the traveling state information comprising traveling speed information and pose information;
determining a deceleration area based on a target map of the target robot, the traveling speed information and the pose information, and determining a buffer area based on the deceleration area;
traveling at a preset speed and sending a communication connection request to a door control system when the target robot travels to the deceleration area;
obtaining a communication connection result between the target robot and the door control system when the target robot travels to the buffer area, and based on the communication connection result, sending an open instruction to the door control system, so as to cause the door control system to open the present door in response to receiving the open instruction; and
passing through the present door.

3. The method according to claim 2, wherein determining the deceleration area based on the target map of the target robot, the traveling speed information and the pose information comprises:
obtaining a travelable path of the target robot from the target map, and determining a start line of the deceleration area from the travelable path of the target robot;
determining a deceleration distance based on the traveling speed information; and
determining the deceleration area based on the pose information, the deceleration distance, and the start line of the deceleration area;
wherein determining the buffer area based on the deceleration area comprises:
extracting an end line of the deceleration area from the deceleration area, the end line of the deceleration area serving as a start line of the buffer area;
obtaining installation position information of the present door from the target map, and determining an end line of the buffer area based on the installation position information of the present door; and
determining the buffer area based on the start line of the buffer area and the end line of the buffer area.

4. The method according to claim 2, wherein obtaining the traveling state information of the target robot comprises:
obtaining positioning information of the target robot; and
wherein traveling at the preset speed and sending the communication connection request to the door control system when the target robot travels to the deceleration area comprises:
determining whether the target robot is located in the deceleration area based on the positioning information; and
reducing a speed of the target robot to a preset speed in the deceleration area, and continuously sending the communication connection request to the door control system when the target robot is located in the deceleration area;
optionally, obtaining the communication connection result between the target robot and the door control system when the target robot travels to the buffer area, and based on the communication connection result, sending the open instruction to the door control system, so as to cause the door control system to open the present door in response to receiving the open instruction comprises:
detecting whether a connection channel is established between the target robot and the door control system when the target robot travels to the buffer area; and
sending the open instruction to the door control system when the connection channel is established between the target robot and the door control system, so as to cause the door control system to open the present door in response to receiving the open instruction.

5. The method according to any one of claims 1 to 4, wherein controlling the present door to be opened comprises:
sending an open instruction to a door control device of the present door, the open instruction being configured to trigger the door control device to open the present door; and
wherein after passing through the present door, the method further comprises;
sending a close instruction to the door control device, or if it is determined that there are other robots waiting to pass through the present door, sending the close instruction to the door control device after the other robots pass through the present door;
wherein the transition area is provided with a door control area corresponding to the present door, and sending the open instruction to the door control device of the present door comprises:
determining, when there are multiple robots in the door control area of the present door, a first robot configured to send the open instruction and a second robot configured to send the close instruction from the multiple robots, the multiple robots comprising the target robot and the other robots; and
sending the open instruction to the door control device by the first robot.

6. The method according to any one of claims 1 to 5, wherein before the target robot travels to a door control area corresponding to the present door, the method further comprises:
detecting whether a transition sub-area corresponding to the present door is occupied, the transition sub-area being a part of the transition area that must be passed to get to the present door;
temporarily not entering the door control area corresponding to the present door when the transition sub-area corresponding to the present door is occupied; and
entering the door control area corresponding to the present door when the transition sub-area corresponding to the present door is not occupied.

7. The method according to any one of claims 1 to 6, wherein controlling the present door to be opened and passing through the present door comprises:
obtaining a target map, the target map comprising multiple levels of doors, the multiple levels of doors being arranged in the transition area connecting a first area and a second area;
obtaining a first width of the transition area and a second width of the target robot, and determining, based on the first width and the second width, a number of robots in parallel that are allowed to travel in parallel in the transition area; and
controlling the present door corresponding to the target robot to be opened and passing through the present door based on the number of robots in parallel and position information of each other robot in the transition area.

8. The method according to claim 7, wherein the number of robots in parallel is one, and the method further comprises:
obtaining, when the target robot is located in a target waiting area, a determination result of whether there are other robots in an opposite waiting area based on the position information of each other robot, the target waiting area and the opposite waiting area being located in two ends of the transition area, respectively;
determining a passing order of the target robot in the target waiting area based on the position information of each other robot; and
controlling, when it is determined that the target robot does not need to wait based on the determination result and the passing order, the present door corresponding to the target robot to be opened and passing through the present door based on the number of robots in parallel and the position information of each other robot in the transition area.

9. The method according to claim 8, wherein determining that the target robot does not need to wait based on the determination result and the passing order comprises:
determining that the target robot does not need to wait when the determination result is that there are no other robots in the opposite waiting area and the passing order is first; and
obtaining a priority traveling direction corresponding to the transition area and a target traveling direction of the target robot when the determination result is that there are other robots in the opposite waiting area, and determining that the target robot does not need to wait when the target traveling direction is with the same as the priority traveling direction and the passing order is first.

10. The method according to claim 7, wherein the number of robots in parallel is at least two, and the method further comprises:
obtaining, when the target robot is located in a target waiting area, a determination result of whether there are other robots in an opposite waiting area based on the position information of each other robot;
when the determination result is that there are no other robots in the opposite waiting area, taking the number of robots in parallel as a target number of robots in a parallel group in the target waiting area, where in the parallel group refers to a group of robots traveling in parallel;
when the determination result is that there are other robots in the opposite waiting area, obtaining a priority traveling direction corresponding to the transition area and a target traveling direction of the target robot, and determining the target number of robots in the parallel group in the target waiting area based on the priority traveling direction, the target traveling direction and the number of robots in parallel;
determining a passing order of a target parallel group to which the target robot belongs in the target waiting area based on the target number of robots; and
controlling the present door corresponding to the target robot to be opened and passing through the present door based on the number of robots in parallel and the position information of each of the other robots in the transition area, when it is determined that the target robot does not need to wait based on the passing order.

11. The method according to claim 7, wherein the number of robots in parallel is one, and controlling the present door corresponding to the target robot to be opened and passing through the present door based on the number of robots in parallel and the position information of each other robot in the transition area comprises:
obtaining target position information of the target robot;
determining a present transition sub-area, a present door and a reference door corresponding to the target robot based on the target position information and installation position information of each door in the multiple levels of doors (1001, 1002, 1003, 1101, 1102, 1103, 1201, 1202, 1203), the present transition sub-area being the first transition sub-area to be passed through by the target robot, the present door being the first door to be passed through by the target robot, and the reference door being the second door to be passed through by the target robot;
determining that there is no other robot in the present transition sub-area based on the position information of each other robot; and
obtaining a state of the reference door, and when the state of the reference door is closed, controlling the present door to be opened and passing through the present door.

12. The method according to claim 7, wherein the number of robots in parallel is at least two, the target robot is an active robot, the active robot being configured to control the present door to be opened or closed, and controlling the present door corresponding to the target robot to be opened and passing through the present door based on the number of robots in parallel and position information of each other robot in the transition area comprises:
obtaining a target traveling direction and target position information of the target robot;
determining a present transition sub-area, a present door and a reference door corresponding to the target robot based on the target position information and the installation position information of each door in the multiple levels of doors, the present transition sub-area being the first transition sub-area to be passed through by the target robot, the present door being the first door to be passed through by the target robot, and the reference door being the second door to be passed through by the target robot;
determining that there is no other robot with the same traveling direction as the target traveling direction in the present transition sub-area, based on a traveling direction and position information of each other robot, and the target traveling direction; and
obtaining a state of the reference door, and when the state of the reference door is closed, controlling the present door to be opened and passing through the present door.

13. The method according to claim 12, wherein the method further comprises:
obtaining updated position information and updated traveling direction of each other robot when the target robot passing through the present door;
determining that the other robots in the target parallel group to which the target robot belongs are located in the present transition sub-area based on the updated position information of each of the other robots;
determining that there is no other robot in the present transition sub-area traveling in a direction opposite to the target traveling direction based on the updated position information and the updated traveling direction of each of the other robots; and
controlling the present door to be closed.

14. A robot, comprising a memory and a processor, wherein the memory stores a computer program, and the processor, when executing the computer program, is configured to perform the steps of the robot traversal method according to any one of claims 1 to 13.

## Patentansprüche

1. Roboterdurchgangsverfahren, wobei das Verfahren auf einen Zielroboter angewendet wird und der Zielroboter ein beliebiger Roboter unter mehreren Robotern ist, die einen Übergangsbereich durchlaufen müssen, das Verfahren umfassend:
Bestimmen, wenn der Zielroboter zum Übergangsbereich fährt, einer aktuellen Tür, die dem Zielroboter im Übergangsbereich entspricht (202); und
Steuern der aktuellen Tür, sodass diese geöffnet wird, und Durchlaufen der aktuellen Tür (204);
**dadurch gekennzeichnet, dass** das Verfahren ferner umfasst:
Rundsenden von Bereichsbelegungsinformationen, wenn der Zielroboter in den Übergangsbereich einfährt, wobei die Bereichsbelegungsinformationen dazu konfiguriert sind, anzuzeigen, dass der Übergangsbereich belegt ist; und
Rundsenden von Bereichsfreigabeinformationen, wenn der Zielroboter aus dem Übergangsbereich herausfährt, wobei die Bereichsfreigabeinformationen dazu konfiguriert sind, anzuzeigen, dass der Übergangsbereich freigegeben ist.

2. Verfahren nach Anspruch 1, wobei das Steuern der aktuellen Tür zum Öffnen und das Durchlaufen der aktuellen Tür umfasst:
Erhalten von Fahrzustandsinformationen des Zielroboters, wobei die Fahrzustandsinformationen Fahrgeschwindigkeitsinformationen und Poseninformationen umfassen;
Bestimmen eines Verzögerungsbereichs basierend auf einer Zielkarte des Zielroboters, den Fahrgeschwindigkeitsinformationen und den Poseninformationen, und Bestimmen eines Pufferbereichs basierend auf dem Verzögerungsbereich;
Fahren mit einer vorgegebenen Geschwindigkeit und Senden einer Kommunikationsverbindungsanforderung an ein Türsteuerungssystem, wenn der Zielroboter in den Verzögerungsbereich einfährt;
Erhalten eines Kommunikationsverbindungsergebnisses zwischen dem Zielroboter und dem Türsteuerungssystem, wenn der Zielroboter in den Pufferbereich einfährt, und basierend auf dem Kommunikationsverbindungsergebnis Senden einer Öffnungsanweisung an das Türsteuerungssystem, um zu bewirken, dass das Türsteuerungssystem die aktuelle Tür als Reaktion auf das Empfangen der Öffnungsanweisung öffnet; und
Durchlaufen der aktuellen Tür.

3. Verfahren nach Anspruch 2, wobei das Bestimmen des Verzögerungsbereichs basierend auf der Zielkarte des Zielroboters, den Fahrgeschwindigkeitsinformationen und den Poseninformationen umfasst:
Erhalten eines befahrbaren Pfads des Zielroboters aus der Zielkarte und Bestimmen einer Startlinie des Verzögerungsbereichs aus dem befahrbaren Pfad des Zielroboters;
Bestimmen einer Verzögerungsstrecke basierend auf den Fahrgeschwindigkeitsinformationen; und
Bestimmen des Verzögerungsbereichs basierend auf den Poseninformationen, der Verzögerungsstrecke und der Startlinie des Verzögerungsbereichs;
wobei das Bestimmen des Pufferbereichs basierend auf dem Verzögerungsbereich umfasst:
Extrahieren einer Endlinie des Verzögerungsbereichs aus dem Verzögerungsbereich, wobei die Endlinie des Verzögerungsbereichs als Startlinie des Pufferbereichs dient;
Erhalten von Installationspositionsinformationen der aktuellen Tür aus der Zielkarte und Bestimmen einer Endlinie des Pufferbereichs basierend auf den Installationspositionsinformationen der aktuellen Tür; und
Bestimmen des Pufferbereichs basierend auf der Startlinie des Pufferbereichs und der Endlinie des Pufferbereichs.

4. Verfahren nach Anspruch 2, wobei das Erhalten von Fahrzustandsinformationen des Zielroboters umfasst:
Erhalten von Positionsbestimmungsinformationen des Zielroboters;
wobei das Fahren mit der vorgegebenen Geschwindigkeit und das Senden der Kommunikationsverbindungsanforderung an das Türsteuerungssystem, wenn der Zielroboter in den Verzögerungsbereich einfährt, umfasst:
Bestimmen, ob sich der Zielroboter basierend auf den Positionsbestimmungsinformationen im Verzögerungsbereich befindet; und
Reduzieren einer Geschwindigkeit des Zielroboters auf eine vorgegebene Geschwindigkeit im Verzögerungsbereich und fortlaufendes Senden der Kommunikationsverbindungsanforderung an das Türsteuerungssystem, wenn sich der Zielroboter im Verzögerungsbereich befindet;
wobei optional das Erhalten des Kommunikationsverbindungsergebnisses zwischen dem Zielroboter und dem Türsteuerungssystem, wenn der Zielroboter in den Pufferbereich einfährt, und basierend auf dem Kommunikationsverbindungsergebnis das Senden der Öffnungsanweisung an das Türsteuerungssystem, um zu bewirken, dass das Türsteuerungssystem die aktuelle Tür als Reaktion auf das Empfangen der Öffnungsanweisung öffnet, umfasst:
Erkennen, ob ein Verbindungskanal zwischen dem Zielroboter und dem Türsteuerungssystem hergestellt ist, wenn der Zielroboter in den Pufferbereich einfährt; und
Senden der Öffnungsanweisung an das Türsteuerungssystem, wenn der Verbindungskanal zwischen dem Zielroboter und dem Türsteuerungssystem hergestellt ist, um zu bewirken, dass das Türsteuerungssystem die aktuelle Tür als Reaktion auf das Empfangen der Öffnungsanweisung öffnet.

5. Verfahren nach einem der Ansprüche 1 bis 4, wobei das Steuern der aktuellen Tür zum Öffnen umfasst:
Senden einer Öffnungsanweisung an eine Türsteuervorrichtung der aktuellen Tür, wobei die Öffnungsanweisung dazu konfiguriert ist, die Türsteuervorrichtung zum Öffnen der aktuellen Tür zu veranlassen;
wobei das Verfahren nach dem Durchlaufen der aktuellen Tür ferner umfasst:
Senden einer Schließanweisung an die Türsteuervorrichtung, oder, wenn bestimmt wird, dass andere Roboter darauf warten, die aktuelle Tür zu durchlaufen, Senden der Schließanweisung an die Türsteuervorrichtung, nachdem die anderen Roboter die aktuelle Tür durchlaufen haben;
wobei im Übergangsbereich ein der aktuellen Tür entsprechender Türsteuerbereich vorgesehen ist, und das Senden der Öffnungsanweisung an die Türsteuervorrichtung der aktuellen Tür umfasst:
Bestimmen, wenn sich mehrere Roboter im Türsteuerbereich der aktuellen Tür befinden, eines ersten Roboters, der dazu konfiguriert ist, die Öffnungsanweisung zu senden, und eines zweiten Roboters, der dazu konfiguriert ist, die Schließanweisung aus den mehreren Robotern zu senden, wobei die mehreren Roboter den Zielroboter und die anderen Roboter umfassen; und
Senden der Öffnungsanweisung an die Türsteuervorrichtung durch den ersten Roboter.

6. Verfahren nach einem der Ansprüche 1 bis 5, wobei das Verfahren, bevor der Zielroboter in einen der aktuellen Tür entsprechenden Türsteuerbereich einfährt, ferner umfasst:
Erkennen, ob ein der aktuellen Tür entsprechender Übergangsteilbereich belegt ist, wobei der Übergangsteilbereich ein Teil des Übergangsbereichs ist, der durchlaufen werden muss, um zur aktuellen Tür zu gelangen;
vorübergehendes Nichteinfahren in den der aktuellen Tür entsprechenden Türsteuerbereich, wenn der der aktuellen Tür entsprechende Übergangsteilbereich belegt ist; und
Einfahren in den der aktuellen Tür entsprechenden Türsteuerbereich, wenn der der aktuellen Tür entsprechende Übergangsteilbereich nicht belegt ist.

7. Verfahren nach einem der Ansprüche 1 bis 6, wobei das Steuern der aktuellen Tür zum Öffnen und das Durchlaufen der aktuellen Tür umfasst:
Erhalten einer Zielkarte, wobei die Zielkarte mehrere Ebenen von Türen umfasst, wobei die mehreren Ebenen von Türen im Übergangsbereich angeordnet sind, der einen ersten Bereich und einen zweiten Bereich verbindet;
Erhalten einer ersten Breite des Übergangsbereichs und einer zweiten Breite des Zielroboters und Bestimmen, basierend auf der ersten Breite und der zweiten Breite, einer Anzahl von Robotern, die nebeneinander im Übergangsbereich fahren dürfen; und
Steuern der dem Zielroboter entsprechenden aktuellen Tür zum Öffnen und Durchlaufen der aktuellen Tür basierend auf der Anzahl von nebeneinander fahrenden Robotern und Positionsinformationen jedes anderen Roboters im Übergangsbereich.

8. Verfahren nach Anspruch 7, wobei die Anzahl der nebeneinander fahrenden Roboter eins ist und das Verfahren ferner umfasst:
Erhalten, wenn sich der Zielroboter in einem Zielwartebereich befindet, eines Bestimmungsergebnisses, ob sich andere Roboter in einem gegenüberliegenden Wartebereich befinden, basierend auf den Positionsinformationen jedes anderen Roboters, wobei der Zielwartebereich und der gegenüberliegende Wartebereich jeweils an zwei Enden des Übergangsbereichs angeordnet sind;
Bestimmen einer Durchlaufreihenfolge des Zielroboters im Zielwartebereich basierend auf den Positionsinformationen jedes anderen Roboters; und
Steuern, wenn basierend auf dem Bestimmungsergebnis und der Durchlaufreihenfolge bestimmt wird, dass der Zielroboter nicht warten muss, der dem Zielroboter entsprechenden aktuellen Tür zum Öffnen und Durchlaufen der aktuellen Tür basierend auf der Anzahl der nebeneinander fahrenden Roboter und den Positionsinformationen jedes anderen Roboters im Übergangsbereich.

9. Verfahren nach Anspruch 8, wobei das Bestimmen, dass der Zielroboter basierend auf dem Bestimmungsergebnis und der Durchlaufreihenfolge nicht warten muss, umfasst:
Bestimmen, dass der Zielroboter nicht warten muss, wenn das Bestimmungsergebnis ergibt, dass sich keine anderen Roboter im gegenüberliegenden Wartebereich befinden und die Durchlaufreihenfolge die erste ist; und
Erhalten einer dem Übergangsbereich entsprechenden prioritären Fahrtrichtung und einer Zielfahrtrichtung des Zielroboters, wenn das Bestimmungsergebnis ergibt, dass sich andere Roboter im gegenüberliegenden Wartebereich befinden, und Bestimmen, dass der Zielroboter nicht warten muss, wenn die Zielfahrtrichtung mit der prioritären Fahrtrichtung übereinstimmt und die Durchlaufreihenfolge die erste ist.

10. Verfahren nach Anspruch 7, wobei die Anzahl der nebeneinander fahrenden Roboter mindestens zwei ist und das Verfahren ferner umfasst:
Erhalten, wenn sich der Zielroboter in einem Zielwartebereich befindet, eines Bestimmungsergebnisses, ob sich andere Roboter in einem gegenüberliegenden Wartebereich befinden, basierend auf den Positionsinformationen jedes anderen Roboters;
wenn das Bestimmungsergebnis ergibt, dass sich keine anderen Roboter im gegenüberliegenden Wartebereich befinden, Verwenden der Anzahl der nebeneinander fahrenden Roboter als Zielanzahl von Robotern in einer Parallelgruppe im Zielwartebereich, wobei sich die Parallelgruppe auf eine Gruppe von Robotern bezieht, die nebeneinander fahren;
wenn das Bestimmungsergebnis ergibt, dass sich andere Roboter im gegenüberliegenden Wartebereich befinden, Erhalten einer dem Übergangsbereich entsprechenden prioritären Fahrtrichtung und einer Zielfahrtrichtung des Zielroboters und Bestimmen der Zielanzahl von Robotern in der Parallelgruppe im Zielwartebereich basierend auf der prioritären Fahrtrichtung, der Zielfahrtrichtung und der Anzahl der nebeneinander fahrenden Roboter;
Bestimmen einer Durchlaufreihenfolge einer Zielparallelgruppe, zu der der Zielroboter gehört, im Zielwartebereich basierend auf der Zielanzahl von Robotern; und
Steuern der dem Zielroboter entsprechenden aktuellen Tür zum Öffnen und Durchlaufen der aktuellen Tür basierend auf der Anzahl der nebeneinander fahrenden Roboter und den Positionsinformationen jedes anderen Roboters im Übergangsbereich, wenn basierend auf der Durchlaufreihenfolge bestimmt wird, dass der Zielroboter nicht warten muss.

11. Verfahren nach Anspruch 7, wobei die Anzahl der nebeneinander fahrenden Roboter eins ist und das Steuern der dem Zielroboter entsprechenden aktuellen Tür zum Öffnen und das Durchlaufen der aktuellen Tür basierend auf der Anzahl der nebeneinander fahrenden Roboter und den Positionsinformationen jedes anderen Roboters im Übergangsbereich umfasst:
Erhalten von Zielpositionsinformationen des Zielroboters;
Bestimmen eines aktuellen Übergangsteilbereichs, einer aktuellen Tür und einer Referenztür, die dem Zielroboter entsprechen, basierend auf den Zielpositionsinformationen und
Installationspositionsinformationen jeder Tür der mehreren Ebenen von Türen (1001, 1002, 1003, 1101, 1102, 1103, 1201, 1202, 1203), wobei der aktuelle Übergangsteilbereich der erste Übergangsteilbereich ist, der vom Zielroboter durchlaufen wird, die aktuelle Tür die erste Tür ist, die der Zielroboter durchläuft, und die Referenztür die zweite Tür ist, die der Zielroboter durchläuft;
Bestimmen, dass sich kein anderer Roboter im aktuellen Übergangsteilbereich befindet, basierend auf den Positionsinformationen jedes anderen Roboters; und
Erhalten eines Zustands der Referenztür und, wenn der Zustand der Referenztür geschlossen ist, Steuern der aktuellen Tür zum Öffnen und Durchlaufen der aktuellen Tür.

12. Verfahren nach Anspruch 7, wobei die Anzahl der nebeneinander fahrenden Roboter mindestens zwei ist, der Zielroboter ein aktiver Roboter ist, wobei der aktive Roboter dazu konfiguriert ist, das Öffnen und Schließen der aktuellen Tür zu steuern, und das Steuern der dem Zielroboter entsprechenden aktuellen Tür zum Öffnen und das Durchlaufen der aktuellen Tür basierend auf der Anzahl der nebeneinander fahrenden Roboter und den Positionsinformationen jedes anderen Roboters im Übergangsbereich umfasst:
Erhalten einer Zielfahrtrichtung und von Zielpositionsinformationen des Zielroboters;
Bestimmen eines aktuellen Übergangsteilbereichs, einer aktuellen Tür und einer Referenztür, die dem Zielroboter entsprechen, basierend auf den Zielpositionsinformationen und den Installationspositionsinformationen jeder Tür der mehreren Ebenen von Türen, wobei der aktuelle Übergangsteilbereich der erste Übergangsteilbereich ist, der vom Zielroboter durchlaufen wird, die aktuelle Tür die erste Tür ist, die der Zielroboter durchläuft, und die Referenztür die zweite Tür ist, die der Zielroboter durchläuft;
Bestimmen, dass sich kein anderer Roboter mit derselben Fahrtrichtung wie die Zielfahrtrichtung im aktuellen Übergangsteilbereich befindet, basierend auf einer Fahrtrichtung und den Positionsinformationen jedes anderen Roboters sowie der Zielfahrtrichtung; und
Erhalten eines Zustands der Referenztür und, wenn der Zustand der Referenztür geschlossen ist, Steuern der aktuellen Tür zum Öffnen und Durchlaufen der aktuellen Tür.

13. Verfahren nach Anspruch 12, wobei das Verfahren ferner umfasst:
Erhalten aktualisierter Positionsinformationen und aktualisierter Fahrtrichtungen jedes anderen Roboters, wenn der Zielroboter die aktuelle Tür durchläuft;
Bestimmen, dass sich die anderen Roboter in der Zielparallelgruppe, zu der der Zielroboter gehört, im aktuellen Übergangsteilbereich befinden, basierend auf den aktualisierten Positionsinformationen jedes anderen Roboters;
Bestimmen, dass sich kein anderer Roboter im aktuellen Übergangsteilbereich befindet, der sich in einer der Zielfahrtrichtung entgegengesetzten Richtung bewegt, basierend auf den aktualisierten Positionsinformationen und den aktualisierten Fahrtrichtungen jedes anderen Roboters; und
Steuern der aktuellen Tür zum Schließen.

14. Roboter, umfassend einen Speicher und einen Prozessor, wobei der Speicher ein Computerprogramm speichert und der Prozessor beim Ausführen des Computerprogramms dazu konfiguriert ist, die Schritte des Roboterdurchgangsverfahrens nach einem der Ansprüche 1 bis 13 durchzuführen.

## Revendications

1. Procédé de franchissement d'un robot, le procédé étant appliqué à un robot cible, et le robot cible étant tout robot parmi plusieurs robots qui doivent passer par une zone de transition, le procédé comprenant les étapes suivantes :
déterminer, lorsque le robot cible se déplace vers la zone de transition, une présente porte correspondant au robot cible dans la zone de transition (202) ; et
commander l'ouverture de la présente porte et traverser la présente porte (204) ;
**caractérisé en ce que** le procédé comprend en outre les étapes suivantes :
diffuser des informations d'occupation de zone lorsque le robot cible se déplace dans la zone de transition, les informations d'occupation de zone étant configurées pour indiquer que la zone de transition est occupée ; et
diffuser des informations de libération de zone lorsque le robot cible sort de la zone de transition, les informations de libération de zone étant configurées pour indiquer que la zone de transition est libérée.

2. Procédé selon la revendication 1, dans lequel la commande de l'ouverture de la présente porte et le passage à travers la présente porte comprennent les étapes suivantes :
obtenir des informations d'état de déplacement du robot cible, les informations d'état de déplacement comprenant des informations de vitesse de déplacement et des informations de pose ;
déterminer une zone de décélération sur la base d'une carte cible du robot cible, des informations de vitesse de déplacement et des informations de pose, et déterminer une zone tampon sur la base de la zone de décélération ;
se déplacer à une vitesse prédéfinie et envoyer une demande de connexion de communication à un système de commande de porte lorsque le robot cible se déplace vers la zone de décélération ;
obtenir un résultat de connexion de communication entre le robot cible et le système de commande de porte lorsque le robot cible se déplace vers la zone tampon et, sur la base du résultat de connexion de communication, envoyer une instruction d'ouverture au système de commande de porte, de manière à amener le système de commande de porte à ouvrir la présente porte en réponse à la réception de l'instruction d'ouverture ; et
passer par la présente porte.

3. Procédé selon la revendication 2, dans lequel la détermination de la zone de décélération sur la base de la carte cible du robot cible, des informations de vitesse de déplacement et des informations de pose comprend les étapes suivantes :
obtenir un chemin pouvant être suivi du robot cible à partir de la carte cible, et déterminer une ligne de départ de la zone de décélération à partir du chemin pouvant être suivi du robot cible ;
déterminer une distance de décélération en fonction des informations de vitesse de déplacement ; et
déterminer la zone de décélération en fonction des informations de pose, de la distance de décélération et de la ligne de départ de la zone de décélération ;
où la détermination de la zone tampon en fonction de la zone de décélération comprend les étapes suivantes :
extraire une ligne d'extrémité de la zone de décélération de la zone de décélération, la ligne d'extrémité de la zone de décélération servant de ligne de départ de la zone tampon ;
obtenir des informations de position d'installation de la présente porte à partir de la carte cible, et déterminer une ligne d'extrémité de la zone tampon sur la base des informations de position d'installation de la présente porte ; et
déterminer la zone tampon sur la base de la ligne de départ de la zone tampon et de la ligne de fin de la zone tampon.

4. Procédé selon la revendication 2, dans lequel l'obtention des informations d'état de déplacement du robot cible comprend les étapes suivantes :
obtenir des informations de positionnement du robot cible ; et
où le déplacement à la vitesse prédéterminée et l'envoi de la demande de connexion de communication au système de commande de porte lorsque le robot cible se déplace jusqu'à la zone de décélération, comprend les étapes suivantes :
déterminer si le robot cible se trouve dans la zone de décélération en fonction des informations de positionnement ; et
réduire une vitesse du robot cible à une vitesse prédéfinie dans la zone de décélération, et envoyer en continu la demande de connexion de communication au système de commande de porte lorsque le robot cible se trouve dans la zone de décélération ;
éventuellement, obtenir le résultat de connexion de communication entre le robot cible et le système de commande de porte lorsque le robot cible se déplace vers la zone tampon et, sur la base du résultat de connexion de communication, envoyer l'instruction d'ouverture au système de commande de porte, de manière à amener le système de commande de porte à ouvrir la présente porte en réponse à la réception de l'instruction d'ouverture :
détecter si un canal de connexion est établi entre le robot cible et le système de commande de porte lorsque le robot cible se déplace vers la zone tampon ; et
envoyer l'instruction d'ouverture au système de commande de porte lorsque le canal de connexion est établi entre le robot cible et le système de commande de porte, de manière à amener le système de commande de porte à ouvrir la présente porte en réponse à la réception de l'instruction d'ouverture.

5. Procédé selon l'une quelconque des revendications 1 à 4, dans lequel la commande de la présente porte devant être ouverte comprend l'étape suivante :
envoyer une instruction d'ouverture à un dispositif de commande de porte de la présente porte, l'instruction d'ouverture étant configurée pour déclencher le dispositif de commande de porte pour ouvrir la présente porte ; et
où, après le passage de la présente porte, le procédé comprend en outre les étapes suivantes :
envoyer une instruction de fermeture au dispositif de commande de porte ou, s'il est déterminé qu'il y a d'autres robots qui attendent de passer par la présente porte, envoyer l'instruction de fermeture au dispositif de commande de porte après le passage par les autres robots de la présente porte ;
où la zone de transition est dotée d'une zone de commande de porte correspondant à la présente porte, et l'envoi de l'instruction d'ouverture au dispositif de commande de porte de la présente porte, comprend les étapes suivantes :
déterminer, lorsqu'il y a plusieurs robots dans la zone de commande de porte de la présente porte, un premier robot configuré pour émettre l'instruction d'ouverture et un deuxième robot configuré pour émettre l'instruction de fermeture depuis les multiples robots, les multiples robots comprenant le robot cible et les autres robots ; et
envoyer l'instruction d'ouverture au dispositif de commande de porte par le premier robot.

6. Procédé selon l'une quelconque des revendications 1 à 5, dans lequel avant que le robot cible se déplace jusqu'à une zone de commande de porte correspondant à la présente porte, le procédé comprenant en outre les étapes suivantes :
détecter si une sous-zone de transition correspondant à la présente porte est occupée, la sous-zone de transition étant une partie de la zone de transition qui doit être passée pour arriver à la présente porte ;
ne pas entrer temporairement dans la zone de commande de porte correspondant à la présente porte lorsque la sous-zone de transition correspondant à la présente porte est occupée ; et
entrer dans la zone de commande de porte correspondant à la présente porte lorsque la sous-zone de transition correspondant à la présente porte n'est pas occupée.

7. Procédé selon l'une quelconque des revendications 1 à 6, dans lequel la commande de la présente porte devant être ouverte et le passage à travers la présente porte comprennent les étapes suivantes :
obtenir une carte cible, la carte cible comprenant plusieurs niveaux de portes, les multiples niveaux de portes étant disposés dans la zone de transition reliant une première zone et une deuxième zone ;
obtenir une première largeur de la zone de transition et une deuxième largeur du robot cible, et déterminer, à partir de la première largeur et de la deuxième largeur, un nombre de robots en parallèle autorisés à se déplacer en parallèle dans la zone de transition ; et
commander la présente porte correspondant au robot cible pour qu'elle soit ouverte, et traverser la présente porte en fonction du nombre de robots en parallèle et des informations de position de chaque autre robot dans la zone de transition.

8. Procédé selon la revendication 7, dans lequel le nombre de robots en parallèle est de un, et le procédé comprend en outre les étapes suivantes :
obtenir, lorsque le robot cible est situé dans une zone d'attente cible, un résultat de détermination précisant s'il existe d'autres robots dans une zone d'attente opposée sur la base des informations de position de chaque autre robot, la zone d'attente cible et la zone d'attente opposée étant situées respectivement au niveau de deux extrémités de la zone de transition ;
déterminer un ordre de passage du robot cible dans la zone d'attente cible sur la base des informations de position de chaque autre robot ; et
commander, lorsqu'il est déterminé que le robot cible n'a pas besoin d'attendre sur la base du résultat de la détermination et de l'ordre de passage, la présente porte correspondant au robot cible pour qu'elle soit ouverte, et traverser la présente porte sur la base du nombre de robots en parallèle et des informations de position de chaque autre robot dans la zone de transition.

9. Procédé selon la revendication 8, dans lequel la détermination que le robot cible n'a pas besoin d'attendre sur la base du résultat de détermination et de l'ordre de passage comprend les étapes suivantes :
déterminer que le robot cible n'a pas besoin d'attendre lorsque le résultat de la détermination est qu'il n'y a pas d'autres robots dans la zone d'attente opposée et que l'ordre de passage est « premier » ; et
obtenir une direction de déplacement prioritaire correspondant à la zone de transition et à une direction de déplacement cible du robot cible lorsque le résultat de la détermination est qu'il y a d'autres robots dans la zone d'attente opposée, et déterminer que le robot cible n'a pas besoin d'attendre lorsque la direction de déplacement cible est identique à la direction de déplacement prioritaire et que l'ordre de passage est « premier ».

10. Procédé selon la revendication 7, dans lequel le nombre de robots en parallèle est au moins deux, et le procédé comprend en outre les étapes suivantes :
obtenir, lorsque le robot cible est situé dans une zone d'attente cible, un résultat de détermination indiquant s'il existe d'autres robots dans une zone d'attente opposée sur la base des informations de position de chaque autre robot ;
lorsque le résultat de la détermination est qu'il n'y a pas d'autres robots dans la zone d'attente opposée, prendre le nombre de robots en parallèle comme nombre cible de robots dans un groupe parallèle dans la zone d'attente cible, où le groupe parallèle se réfère à un groupe de robots se déplaçant en parallèle ;
lorsque le résultat de la détermination est qu'il y a d'autres robots dans la zone d'attente opposée, obtenir une direction de déplacement prioritaire correspondant à la zone de transition et une direction de déplacement cible du robot cible, et déterminer le nombre cible de robots dans le groupe parallèle dans la zone d'attente cible en fonction de la direction de déplacement prioritaire, de la direction de déplacement cible et du nombre de robots en parallèle ;
déterminer un ordre de passage d'un groupe parallèle cible auquel appartient le robot cible dans la zone d'attente cible en fonction du nombre cible de robots ; et
commander la présente porte correspondant au robot cible pour qu'elle soit ouverte, et traverser la présente porte sur la base du nombre de robots en parallèle et des informations de position de chacun des autres robots dans la zone de transition, lorsqu'il est déterminé que le robot cible n'a pas besoin d'attendre sur la base de l'ordre de passage.

11. Procédé selon la revendication 7, dans lequel le nombre de robots en parallèle est de un, et la commande de la présente porte correspondant au robot cible devant être ouverte et le passage par la présente porte sur la base du nombre de robots en parallèle et des informations de position de chaque autre robot dans la zone de transition comprennent les étapes suivantes :
obtenir des informations de position cible du robot cible ;
déterminer une sous-zone de transition présente, une présente porte et une porte de référence correspondant au robot cible sur la base des informations de position cible et des informations de position d'installation de chaque porte dans les multiples niveaux de portes (1001, 1002, 1003, 1101, 1102, 1103, 1201, 1202, 1203), la présente sous-zone de transition étant la première sous-zone de transition à être traversée par le robot cible, la présente porte étant la première porte à être traversée par le robot cible, et la porte de référence étant la deuxième porte à être traversée par le robot cible ;
déterminer qu'il n'y a pas d'autre robot dans la présente sous-zone de transition sur la base des informations de position de chaque autre robot ; et
obtenir un état de la porte de référence et, lorsque l'état de la porte de référence est fermé, commander l'ouverture de la présente porte et traverser la présente porte.

12. Procédé selon la revendication 7, dans lequel le nombre de robots en parallèle est au moins deux, le robot cible est un robot actif, le robot actif étant configuré pour commander la présente porte pour qu'elle soit ouverte ou fermée, et la commande de la présente porte correspondant au robot cible pour qu'elle soit ouverte et le passage par la présente porte sur la base du nombre de robots en parallèle et des informations de position de chaque autre robot dans la zone de transition comprennent les étapes suivantes :
obtenir une direction de déplacement cible et des informations de position cible du robot cible ;
déterminer une sous-zone de transition présente, une présente porte et une porte de référence correspondant au robot cible sur la base des informations de position cible et des informations de position d'installation de chaque porte dans les multiples niveaux de portes, la sous-zone de transition présente étant la première sous-zone de transition devant être traversée par le robot cible, la présente porte étant la première porte devant être traversée par le robot cible, et la porte de référence étant la deuxième porte devant être traversée par le robot cible ;
déterminer qu'il n'y a pas d'autre robot ayant la même direction de déplacement que la direction de déplacement cible dans la sous-zone de transition présente, sur la base d'une direction de déplacement et des informations de position de chaque autre robot, et de la direction de déplacement cible ; et
obtenir un état de la porte de référence et, lorsque l'état de la porte de référence est fermé, commander l'ouverture de la présente porte et traverser la présente porte.

13. Procédé selon la revendication 12, le procédé comprenant en outre les étapes suivantes :
obtenir des informations de position mises à jour et une direction de déplacement mise à jour de chaque autre robot lorsque le robot cible passe par la présente porte ;
déterminer que les autres robots du groupe parallèle cible auquel appartient le robot cible sont situés dans la sous-zone de transition présente sur la base des informations de position mises à jour de chacun des autres robots ;
déterminer qu'il n'y a pas d'autre robot dans la sous-zone de transition présente se déplaçant dans une direction opposée à la direction de déplacement cible sur la base des informations de position mises à jour et de la direction de déplacement mise à jour de chacun des autres robots ; et
commander la présente porte pour qu'elle soit fermée.

14. Robot, comprenant une mémoire et un processeur, où la mémoire stocke un programme informatique, et le processeur, lorsqu'il exécute le programme informatique, est configuré pour exécuter les étapes du procédé de franchissement de robot selon l'une quelconque des revendications 1 à 13.
